# EUROPEAN PATENT SPECIFICATION

(11) **EP 1 094 646 B1**
(45) Date of publication and mention of the grant of the patent: **29.11.2006**
(21) Application number: 00308967.9
(22) Date of filing: 12.10.2000
(51) Int. Cl.: H04L 29/06, H04L 12/28, H04Q 11/04

(54) **Multi channel communication control system and method**
Mehrkanal- Kommunikationssteuerungssystem und -verfahren
Système et méthode de contrôle de communication multiple canaux

(30) Priority: 22.10.1999 GB 9925101
(43) Date of publication of application: 25.04.2001
(73) Proprietor: Virtual Access Technology Limited, Dublin 2 (IE)
(72) Inventor: Clark, Terence John, Wokingham, Berkshire RG40 1PL (GB); Harrison, Robert Charles, Basingstoke, Hampshire RG23 7HT (GB); Monaghan, Eugene Patrick, Dungannon, Country Tyrone BT70 1SG (IE)
(74) Representative: Collins, John David

(56) References cited:
- WO-A-98/45984
- WO-A-98/54868
- WO-A-99/44335
- CISCO: "Single-User Network Access security TACACS+" CISCO SYSTEMS PUBLICATION, 30 March 1995 (1995-03-30), XP002124521 Retrieved from the Internet: <URL:http://www.cisco.com/warp/public/614/ 7.html> [retrieved on 1999-12-02]
- ZORN G: "RADIUS Attributes for Multilink PPP Bandwidth Allocation Control" IETF INTERNET-DRAFT, [Online] February 1998 (1998-02), pages 1-6, XP002247223 Retrieved from the Internet: <URL:www.globecomm.net/ietf> [retrieved on 2003-07-10]
- "Configuring X.25 on ISDN using AO/DI" CISCO INTERNET SITE, [Online] 3 March 1999 (1999-03-03), pages 1-16, XP002225617 Retrieved from the Internet: <URL:www.cisco.com> [retrieved on 2002-12-17]
- KUZMA ET AL: "ALWAYS ON DYNAMIC ISDN (AODI)" PPEXT WORKING GROUP, June 1999 (1999-06), XP002155735
- SCHNOBLICK R: "AO/DI: ALWAYS ON/DYNAMIC ISDN" FUNKSCHAU, FRANZIS-VERLAG K.G. MUNCHEN, DE, vol. 72, no. 18, 20 August 1999 (1999-08-20), pages 20-23, XP000930820 ISSN: 0016-2841
- SCHICKER P ET AL: "A NEW ISDN PACKET HANDLER INTERFACE" INNOVATIONS IN SWITCHING TECHNOLOGY. STOCKHOLM, MAY 28 - JUNE 1, 1990, PROCEEDINGS OF THE INTERNATIONAL SWITCHING SYMPOSIUM. (ISS), NEW YORK, IEEE, US, vol. 5 SYMP. 13, 28 May 1990 (1990-05-28), pages 183-186, XP000130946
- RIGNEY C: "RFC 2059 - RADIUS Accounting" IETF REQUEST FOR COMMENTS, January 1997 (1997-01), XP002206199 Retrieved from the Internet: <URL:http://www.ietf.org/rfc/rfc2059.txt> [retrieved on 2002-07-16]
- RIGNEY C ET AL: "Remote Authentication Dial In User Service (RADIUS) Version 2" IETF INTERNET-DRAFT, [Online] February 1999 (1999-02), pages 1-75, XP002247224 Retrieved from the Internet: <URL:www.globecom.net/ietf> [retrieved on 2003-07-09]

## Description

The present invention generally relates to a multichannel communication control system and method for controlling communications between a terminal and a service provider using multiple channels for communication.

The provision of a large bandwidth communication channel between a user and a service provider such as an Internet service provider can be prohibitive for financial reasons. Further, such a large bandwidth connection can require the installation of new communication lines and hardware.

Therefore, in order to provide large bandwidth connections between users and service providers it has become common to use multiple narrow bandwidth channels in parallel. The data to be communicated between the user and the service provider can thus be spread across these channels to provide a large bandwidth connection.

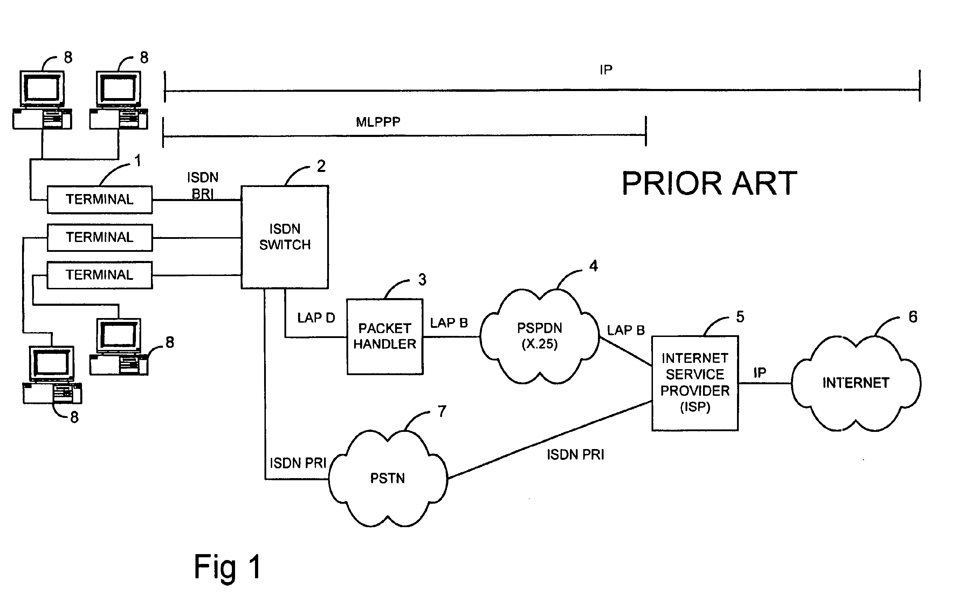

An example of such a system is for connecting users to Internet service providers termed in the art Always on Dynamic ISDN (AO/DI). An AO/DI service is described in the Vendor's ISDN Association Document Number: RFC 004 dated 25 February 1999 entitled: "Always ON/Dynamic ISDN" by a Kuzma and D Graham. Figure 1 illustrates such a system. This system was developed using the integrated services digital network (ISDN) to provide the required bandwidth over a public switch network thus providing dial up technology similar to the analog dial up modem method. This technique is equally applicable to accessing the Internet or an Intranet. AO/DI was created to bring together the benefits of a leased circuit (permanent connection to the Internet) with an ISDN dial up circuit (bandwidth on demand).

AO/DI offers a permanent low speed connection to the Internet and when the user requires more bandwidth for high speed data transfer, the network can automatically increase the bandwith available. The bandwidth can also be dropped when the user no longer requires it. This has the benefit of providing a permanent connection at low cost whilst allowing an efficient user of the bandwidth when required.

Referring specifically to Figure 1, a terminal 1 is connected to an ISDN switch by a basic rate ISDN line (ISDN BRI). The terminal can comprise an ISDN modem or an ISDN router. If it is an ISDN router, many users may have access to the terminal 1 over a local area network (LAN) from computers 8. Otherwise a single computer 8 is connected to an ISDN modem. The ISDN switch 2 is of course connected to many terminals. The ISDN BRI comprises a D channel of low bandwidth (16 kbps) and two B channel of larger bandwidths (64 kbps). Conventionally, the D channel of the ISDN BRI is used for signalling between the terminals 1 and the ISDN switch 2. Under the AO/DI system however, the D channel carries data which has to be switched out of the ISDN switch 2. Within the ISDN switch 2, data on the D channel can be identified merely as signally data when the service access point identifier (SAPI) is set to zero. Data which can be switched out of an ISDN switch 2 is identified by any higher SAPI signal (i.e. SAPI 16 for X.25 packet data) and requires the switching of the D channel data out over a public switch packet data network (PSPDN) 4. Thus, when the user of a terminal 1 subscribes to an AO/DI service connection to an Internet service provider (ISP) 5, the ISDN switch 2 will provide a logical connection using the D channel. This is achieved by outputting from the ISDN switch 2 using a Packet Handler Interface (PHI) the channel data using a link access protocol (LAP) termed LAP D layer 2 protocol overlaid with an X.25 layer 3 protocol. This is received by a packet handler 3 which uses a different LAP, LAP B to carry data using the level 3 protocol X.25 over an X.25 network (PSPDN) 4. An ISP 5 is provided with an X.25 LAP B interface in order to receive the X.25 D channel data thus providing a permanent virtual circuit (PVC) between the terminal 1 and the ISP 5.

The protocol for the transmission of data between a users computer and an ISP is the point to point protocol (PPP). However, in the AO/DI service, the PVC provided for the D channel is only a low bandwidth connection. The PPP protocol (which is a level 2 protocol) is encapsulated within the X.25 level 3 protocol and carried by the LAP B level 2 protocol over the PSPDN 4.

The AO/DI service requires the user to be able to gain access to the two B channels provided by the ISDN BRI line when necessary in order to transmit data across multiple channels simultaneously. Thus, instead of implementing the PPP protocol for connecting the user of terminal 1 to the ISP 5, the AO/DI service utilises a different protocol termed the multi link point to point protocol (MLPPP). MLPPP is a protocol which controls the fragmenting, reassembling and sequencing of the data packets across the multiple channels. Thus, when a user wishes to use multiple channels, the two B channels are used for transmitting of data and ISDN switch 2 recognises that the B channels are directed to the ISP 5. The B channels are thus output from the ISDN switch 2 over a primary rate ISDN line (ISDN PRI) over the public switched telephone network 7 to reach the ISP 5. Thus, the terminal 1 and the ISP 5 must implement MLPPP in order to spread the data between the channels for communication.

The AO/DI service also stipulates that the bandwidth provided for the MLPPP session between the terminal 1 of the ISP 5 should be controllable as necessary. Thus there is implemented a bandwidth allocation control protocol (BACP) by both the terminal 1 and ISP 5. In accordance with the BACP, the user of the terminal 1 can request an increase in bandwidth when this is required e.g. when web pages with graphics are to be downloaded from the Internet 6. The BACP provides for the allocation of up to 2 B channels when this is required and also for the disconnection of B channels from the MLPPP session when they are not needed.

Thus the ISP 5, in order to provide the AO/DI service, must be provided with an X.25 LAP B interface for connection to the PSPDN 4. Thus, the ISP 5 must handle the level 2 LAP B protocol and the level 3 X.25 protocol. Further, the ISP 5 must handle all of the other protocols which accompany the provision of the AO/DI service i.e. the MLPPP and BACP.

For conventional analog dial up services, a remote access server (RAS) at an ISP uses the level 2 protocol PPP carrying the level 3 protocol IP to communicate with a computer via a terminal i.e. modem. The ISP 5 connects to the Internet 6 using the level 3 IP protocol to provide an IP connection from the terminal to the Internet.

Thus in order to provide AO/DI service, the RAS at the ISP is subjected to a burdensome task of handling protocols which add complexity. Further, the RAS at the ISP 5 is required to be provided with an X.25 interface in order to interface to the PSPDN 4. A further disadvantage of the prior art AO/DI service is that the telecommunications company (Telco) providing the communications lines between the terminal 1 and the ISP 5 is required to provide ISDN PRI lines all the way from the ISDN switch 2 to the ISP 5 and to provide connections over the PSPDN 4. The provision of ISDN PRI lines is expensive to Telco and the PSPDN 4 for X.25 traffic is network which Telcos' would like to phase out.

In the arrangement shown in Figure 1 the ISP 5 includes a remote access server (RAS) in order to provide Internet Access for the terminals 1. The remote access server terminates the MLPPP session and includes a router to generate IP as an output. The remote access server is a conventional method of allowing a dial-up connection to the Internet. A PPP session is made from the dial-up modem to the remote access server and IP is output. In order to generate an IP output, routing information is required since IP requires the use of an IP address as the source and destination of the IP packets. Thus in the prior art arrangement of Figure 1 the ISP 5 is required to have a specially designed remote access server to receive the LAP B input and the ISDN PRI input.

WO 98/54868 discloses a data access transport system in which a network controller controls the service provision and controls bandwidth allocation. Multi link protocol segments are directed to an appropriate network gateway that supports multi link protocol.

WO 99/44335 discloses a bandwidth allocation method and apparatus in which bandwidth available for communication in a network is predictively assigned.

WO 98/45984 discloses a computer network comprising a plurality of network access servers. Multi link connection can be made through physical ports of different network access servers to a single logical port of a network access server by reassembling the frames and terminating the multi link session.

"Configuring X.25 on ISDN using AO/DI" (CISCO Internet site, 3 March 1999) provides further information on the use and configuration of AO/DI systems.

"Always On Dynamic ISDN (AODI)" (PPPEXT Working Group, June 1999) is another source of information on AO/DI systems.

It is an object of the first aspect of the present invention to overcome the limitations of the prior art and provide users wishing to access a service with the ability to use multiple channels whilst still allowing an Internet Service Provider to receive a single link input PPP session for a user. This allows the Internet Service Provider to use a conventional broad band access server (BAS) to receive a broad band PPP input and output IP. The Internet Service Provider thus is not required to use a special access server which can terminate MLPPP. The Internet Service Provider is thus provided with the ability to use a conventional access server to provide access to users who wish to use the multilink protocol and also to allow access to users using a conventional single link protocol: the Internet service providers access server only sees single link PPP sessions for each user.

In accordance with the first aspect the present invention provides a method as claimed in claim 1.

A second aspect of the present invention provides a communication system as claimed in claim 16.

A third aspect of the present invention provides a communication apparatus as claimed in claim 31.

Thus the present invention overcomes the limitations in the prior art since it removes the necessity for a service provider to be involved with the multi link protocol MLPPP. The intermediate communication terminal terminates the multi link protocol and generates a single link protocol PPP feed to the service provider. Thus, the service provider is provided with a PPP feed which is the format in which service providers conventionally communicate and this enables the ISP to use a conventional broad band access server (BAS).

In accordance with the present invention, the intermediate communications terminal can be operated by a Telco or other body independently to the service provider, thus freeing the service provider from being involved in more complex protocols for communications to users.

The present invention is applicable to conventional dial up services such as using ISDN BRI lines in which multiple lines can be used from the terminal to a communication apparatus in the network.

Also the present invention is applicable to digital subscriber line (DSL) services wherein the user can use multiple DSL lines connect to a DSL server. MLPPP is used between the users DSL terminal and the DSL server and PPP is used between the DSL server and the ISP.

In accordance with the conventional AO/DI service, in an embodiment of the present invention, one of the multiple channels and a single channel can provide a permanent channel between the user and the service provider. In this way the service is "always on". In accordance with the conventional AO/DI service, this can be provided by the D channel of the ISDN BRI line. The D channel is terminated in the intermediate communications terminal. Also, the B channels are terminated in the intermediate communications terminal.

In one embodiment, the intermediate communications terminal is provided close to the ISDN switch to which the users terminal is connected via an ISDN BRI line. The ISDN switch is connected to the intermediate communications terminal via an ISDN PRI line carrying a plurality of B channel communications and via a packet handler interface carrying a plurality ofD channel communications. In this embodiment the intermediate communications terminal can be provided with a switch in order to route non AO/DI D channel communications which are not directed to the service provider out over a packet switch public data network (PSPDN), to terminate D channel communications directed to the service provider, and to generate D channel communications from the service provider to the user. Thus in this embodiment, the intermediate communications terminal terminates the D channel communications. Thus in accordance with the conventional AO/DI service it terminates the LAP D level 2 protocol and the X.25 level 3 protocol whilst receiving the encapsulated MLPPP level 2 protocol.

In order to set up the PPP session between a user and the service provider, an initial authentication exchange between the user and the service provider takes place transparently through the intermediate communications terminal. The intermediate communications terminal merely converts authentication calls in MLPPP from the user to PPP for the service provider and in reverse, it converts the authentication calls from the service provider in PPP to MLPPP for the user.

In an embodiment to the present invention, the intermediate communications terminal can control the bandwidth allocated for communications by controlling the number of multiple channels to be used for communication between the user and the intermediate communications terminal. The single channel between the intermediate communications terminal and the service provider comprises a single channel of variable bandwidth.

In order to set up additional channels using MLPPP, authentication is required for these channels in accordance with authentication protocols such as CHAP, PAP etc. The intermediate communications terminal thus has to perform a form of authentication to fool the terminal into thinking that the authentication has been carried out by the service provider. In an embodiment, a simple technique can comprise the recording of the initial authentication and replaying the authentication.

Embodiments of the present invention will now be described with reference to the accompanying drawings, in which:
Figure 1 is a schematic diagram of a communication system for providing the conventional AO/DI service;
Figure 2 is a schematic diagram of a communication system providing an AO/DI service in accordance with a first embodiment of the present invention;
Figure 3 is a schematic diagram of the AO/DI server of Figure 2;
Figure 4 is a diagram illustrating the levels in the communications between the terminal and the ISP;
Figure 5 is a flow diagram of the method of establishing a first communication link in the AO/DI service in accordance with the first embodiment of the present invention;
Figure 6 is a diagram illustrating the phases in setting up the first communication link;
Figure 7 is a flow diagram of the method of increasing the number of communications links in the AO/DI service of the first embodiment of the present invention;
Figure 8 is a diagram illustrating the phases involved in setting up further communications links in the first embodiment in accordance with a first method;
Figure 9 is a diagram illustrating the phases in setting up further communication links in the first embodiment of the present invention in a second method;
Figure 10 is a flow diagram of the method of reducing bandwidth by dropping communications links;
Figure 11 is a schematic diagram of a communications system for providing an AO/DI service in accordance with a second embodiment to the present invention;
Figure 12 is a diagram illustrating the phases of adding communications links in accordance with the second embodiment of the present invention;
Figure 13 is a schematic diagram of a communications system for providing an AO/DI service in accordance with a third embodiment to the present invention;
Figure 14 is a schematic diagram of a communications system for providing bandwidth control in a multi channel communications system between a terminal and an Internet service provider;
Figure 15 is a schematic diagram of a prior art communication system for providing access to an ISP using DSL;
Figure 16 is a schematic diagram of a communications system for providing access to an ISP via a large bandwidth by aggregating DSL lines in accordance with a fifth embodiment of the present invention;
Figure 17 is a schematic diagram of a communications system for providing a broad band DSL access and an ISDN AO/DI access to an ISP by combining the first and fourth embodiments of the invention to provide a sixth embodiment of the present invention;
Figure 18 is a schematic diagram of the DSL server used in the embodiments of Figures 16 and 17;
Figure 19 is a schematic diagram of a modem for use as the terminal in the fifth or sixth embodiments illustrated in Figures 16 and 17;
Figure 20 is a schematic diagram of a DSL router for use as the terminal in the fifth or sixth embodiments of the present invention illustrated in Figures 16 and 17;
Figure 21 is a diagram illustrating the levels in the communication between the terminal and the ISP in the fifth or sixth embodiments of the present invention;
Figure 22 is a flow diagram illustrating the connection process for establishing the multi-link DSL communication in accordance with the fifth or sixth embodiment of the present invention;
Figure 23 is a diagram illustrating the phases in setting up the first communication link; and
Figure 24 is a diagram illustrating the phases involved in setting up further communication links in the fifth or sixth embodiments of the present invention.

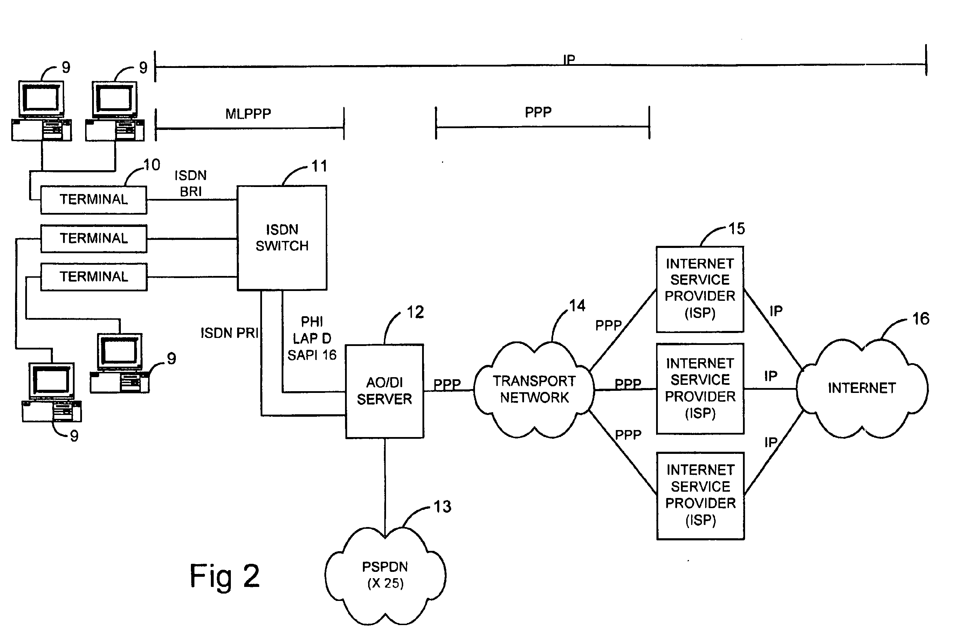

A first embodiment to the present invention will now be described with reference to Figures 2 to 10.

Referring to Figure 2, this diagram schematically illustrates a communication system according to the first embodiment of the present invention for providing an AO/DI service. A plurality of terminals 10 operated by respective users are each connected via an ISDN BRI line to an ISDN switch 11. The terminals can comprise an ISDN modem or router. The ISDN router can be connected to any number of computers 9 over a local area network (LAN). The computers can communicate with the router, using internet protocol over the network protocol e.g. Ethernet. The ISDN modem can be connected to a computer 9 and can communicate with the modem using PPP. D channel data identified by the service access point identifier (SAPI) which comprises data rather than switch signalling messages is output over a packet handler interface (ETS 3000-099) using the LAP D level 2 protocol and the level 3 X.25 protocol to an AO/DI server 12. Also, an ISDN PRI line is provided from the ISDN switch 11 to the AO/DI server 12 to provide a number, i.e. 30 in Europe and 24 in USA of B channels which comprise channels between the terminals 10 and the ISPs 15. Although in this embodiment a single packet handler interface and a single PRI line is described, more than one of each can be used. Communications take place between the terminals 10 and the AO/DI server 12 using the MLPPP. The AO/DI server 12 terminates the MLPPP, the X.25 protocol, the LAP D protocol, and the ISDN lines. The AO/DI server 12 is also connected to a PSPDN 13 to route out X.25 traffic received over the D channel which is not intended for the ISPs 15.

Data is passed between the AO/DI server 12 and the ISPs 15 using PPP over a transport network 14 such as an Ethernet or ATM. The ISPs 15 are connected to the Internet 16 using conventional communication lines over which the Internet protocol (IP) is used for communication between the ISP 15 and the Internet 16 to provide IP between the terminals and the Internet.

It can thus be seen from Figure 2 that the ISPs only receive data using PPP. They do not need to deal with the X.25 protocol, the LAP D protocol, MLPPP, or any other facets of the AO/DI service such as BACP. The ISPs 15 are simply provided with a variable bandwidth PPP feed.

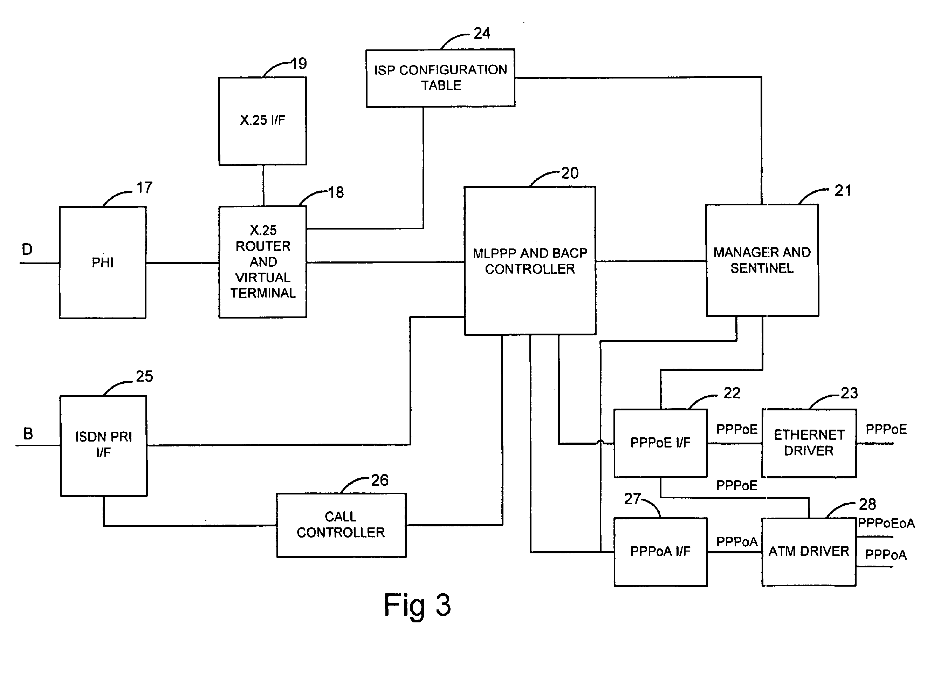

Figure 3 is a schematic diagram illustrating the structure of the AO/DI server 12 in more detail.

The modules illustrated in Figure 3 can be implemented either partly or wholly in software.

As can be seen in Figure 3, the D channel data is input to a packet handler interface (PHI) 17. The PHI 17 can support up to 31 Bd channels which will contain multiplexed LAP D data from the AO/DI users of terminals 10. The packet handler function implemented within the PHI terminates the LAP D permanent logical links (PLLs) and enables X.25 layer 3 data to be passed onto the X.25 router and virtual terminal 18. Within the X.25 router and virtual terminal 18, the network user address (NUA) of the X.25 protocol is inspected to determined where to route the data. In order to facilitate this determination, the X.25 router and virtual terminal 18 is able to look up configuration data in an ISP configuration table 24 using the NUA. If the NUA indicates that the X.25 data is not intended for ISPs subscribing to the AO/DI service provided by the AO/DI server 12, the X.25 data is routed out over the X.25 interface 19 over the PSPDN 13. The X.25 data which is routed out can comprise conventional D channel data such as used in credit card validation by the banks, or other conventional AO/DI data for conventional AO/DI servers implemented by ISPs.

For data identified by the X.25 router and virtual terminal 18 as comprising data to be routed to an ISP by the AO/DI server 12, the X.25 layer 3 data is terminated to extract the MLPPP level 2 PPP data packets for input to the MLPPP and BACP controller 20.

The B channel data which is input over the ISDN PRI lines to the AO/DI server 12 is input into the PRI interface 25 to terminate the ISDN lines. The MLPPP level 2 PPP data packets carried by the B channels are then input into the MLPPP and BACP controller 20. The MLPP and BACP controller aggregates the MLPPP data packets in accordance with the MLPPP protocol in order to generate a single PPP packet data stream which is output either to a PPP over Ethernet (PPPoE) interface 22 or to a PPP over Asynchronous transfer mode (ATM) (PPPoA) interface 27. The type of interface is selectable. The PPP packets are converted to the PPPoE or PPPoA protocol and output to an Ethernet driver 23 which is connected to an Ethernet line e.g. 100baseT or to an ATM driver 28 which is connected to an ATM network and can output PPPoEoA or PPPoA. The NUA in the X.25 protocol is used to determine the destination IP for the PPP data.

A manager and sentinel 21 is provided to control the ISP configuration table 24 the MLPPP and BACP controller 20 and the PPPoE interface 22. The manager and sentinel 21 can monitor the communications traffic and can control it using information from the ISP configuration table. This will be described in more detail hereinafter.

The MLPPP and BACP controller 20 not only aggregates the MLPPP data to generate PPP and in reverse splits the PPP data to form MLPPP, it can also, in accordance with the BACP, allow additional channels to be added and removed from a PPP session. In accordance with conventional AO/DI, the D channel is always connected and B channels can be added to a session or removed as necessary. In order for B channels to be controlled, a call controller 26 is provided between the MLPPP and BACP controller 20 and the ISDN PRI interface 25.

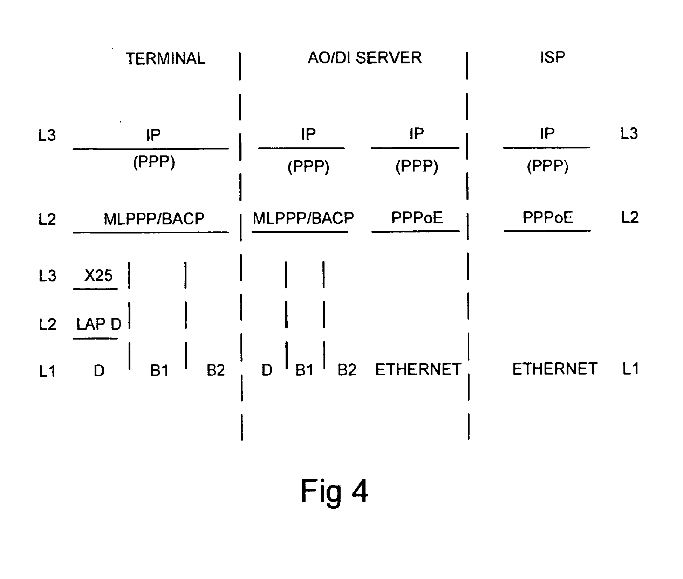

Figure 4 illustrates the levels of the communications between the terminals and the ISP.

At the physical level (level 1), the terminal uses the ISDN PRI line and is thus provided with a D channel and two B channels. The D channel uses the conventional LAPD protocol level 2 for the D channel over which is used the level 3 X.25 protocol. Encapsulated within the X.25 protocol is level 2 MLPPP and BACP data. The level 2 MLPPP data carries level 3 IP data. The B channels comprise the level 1 physical layer and these carry the level 2 MLPPP and BACP data with no intermediate protocol levels.

The AO/DI server receives the data from the terminal in the same format. The D channel is provided over the PHI. Thus the AO/DI server has to handle the LAP D protocol, the X.25 protocol, the MLPPP protocol and the BACP protocol. The output from the AO/DI server in this example is over an Ethernet level 1 connection with level 2 PPPoE protocol carrying level 3 IP data. Thus the ISP receives only the level 2 PPPoE protocol carrying the level 3 IP data over the physical level 1 Ethernet link. The ISP does not have to involve itself in any of the other protocols.

In this example the level 2 protocol used is PPP over Ethernet. However, any signal link point to point protocol can be used such as ATM (Asynchronous Transfer Mode), L2TP (Layer 2 Tunnelling Protocol), Asynchronous Transfer Mode (ATM) or frame relay (FR).

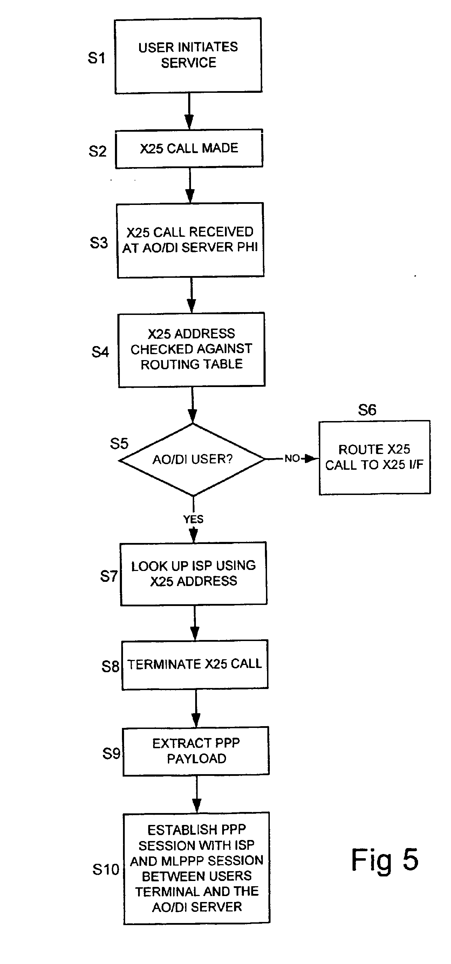

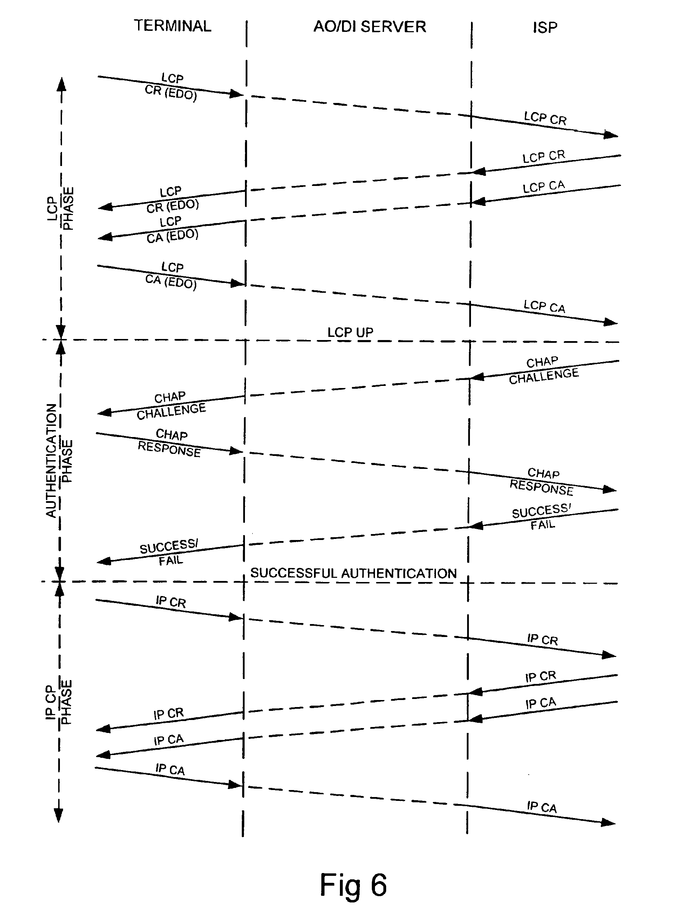

A method of setting up an AO/DI service will now be described with reference to Figures 5 and 6.

In step S1 of the flow diagram of Figure 5, a user initiates an AO/DI service. An X.25 call is thus made in step S2 from the users terminal and in step S3 the X.25 call is received at the packet handler interface 17 of the AO/DI server 12. In step S4 the X.25 router and virtual terminal checks the X.25 address in the NUA against the routing table data in the ISP configuration table 24. It is thus determined whether the data is from an AO/DI user. If not, the X.25 call is routed to the X.25 interface 19 in step S6. If in step S5 it is determined that the X.25 call is from an AO/DI user requesting the initiation of a service to an ISP, in step S7 the X.25 router and virtual terminal 18 looks up the ISP name using the X.25 NUA. In step S8 the X.25 protocol is then terminated and in step S9 the PPP payload is extracted. The MLPPP and the BACP controller 20 then establishes a PPPoE session using the ISP name between itself and the ISP to carry the PPP protocol between the ISP 15 and the terminal in step S10. Thus the initial link via the D channel is set up and provides a permanent connection between the terminal 10 and the ISP 15 wherein the terminal 10 uses the MLPPP protocol and the ISP 15 uses a single link PPP protocol.

Figure 6 illustrate the phases of the setting up of the PPP session in more detail.

MLPPP comprises three phases:
1. A link control protocol (LCP) phase;
2. An authentication phase; and
3. An Internet protocol control protocol (IP CP) phase.

MLPPP differs from PPP in that MLPPP has multiple links. Thus more control is required and thus the protocol includes an extension to the parameters negotiated during the LCP phase. Further, for MLPPP, the authentication phase requires an authentication for each channel as it is added to a MLPPP session. Thus the AO/DI server 12 operates as an interface between the MLPPP and the PPP and thus, as can be seen in Figure 6, during the initial setting up of an AO/DI service i.e. the setting up of the first member link, it acts transparently during the authentication phase.

When a user wishes to set up an AO/DI session, during the LCP phase, an LCP configuration request (LCP CR) is carried by the MLPPP end point discriminator option (EDO). The LCP CR is passed by the AO/DI server to the ISP. The ISP responds to the configuration request with a configuration acknowledge (CA) and with its own configuration request. These are not passed transparently through the AO/DI server to the terminal since the AO/DI server adds or removes the MLPPP options to the LCP requests and responses depending upon the direction of transfer. The terminal responds to the configuration request from the ISP with a configuration acknowledge which once again is passed through the AO/DI server to the ISP.

Although in Figure 6 each configuration request is responded to with a configuration acknowledge, the configuration negotiation between the terminal and the ISP may take the form of several configuration refusals from either the terminal or the ISP before the configurations are accepted. Once both the terminal and the ISP have acknowledged configuration requests, the LCP phase is completed and the link control protocol is up.

The process then enters the authentication phase. An ISP then generates a Challenge Handshake Authentication Protocol (CHAP) challenge which comprises a randomly generated number. This is passed by the AO/DI server to the terminal which responds with a CHAP response which is passed to the ISP. The CHAP response is once again a number which is generated using the CHAP challenge and the users unique key. The CHAP response also includes the users surname. Thus the ISP is able to use the users username to look up the users unique key and generate the expected CHAP response. If it agrees with the received response, the ISP returns an authentication success signal or else it returns a fail signal. Assuming that authentication has been successful, the process will then enter the IP CP phase. If authentication has not been successful, the connection will be dropped.

In the IP CP phase parameters to be used for the IP are negotiated e.g. IP address. Thus the terminal generates an IP configuration request (IP CR) which is transmitted to the ISP transparently. The ISP returns with a configuration acknowledge and its own configuration request which are passed to the terminal. The terminal responds with a configuration acknowledge to the ISP and thus the PPP session is successfully negotiated and set up. It will be understood, that during the negotiation of the IP CP, there may be several configuration requests passed between the terminal and the ISP before the IP CP is successfully negotiated.

It can thus be seen in Figure 6 that during PPP authentication for an initial link, the AO/DI server acts transparently to pass on the PPP configuration data.

Once a PPP session has been initiated, in accordance with the conventional AO/DI service, the bandwidth of the PPP session can be increased by the addition of channels using requests in accordance with the bandwidth allocation protocol (BAP). The form of the BAP is determined by the BACP.

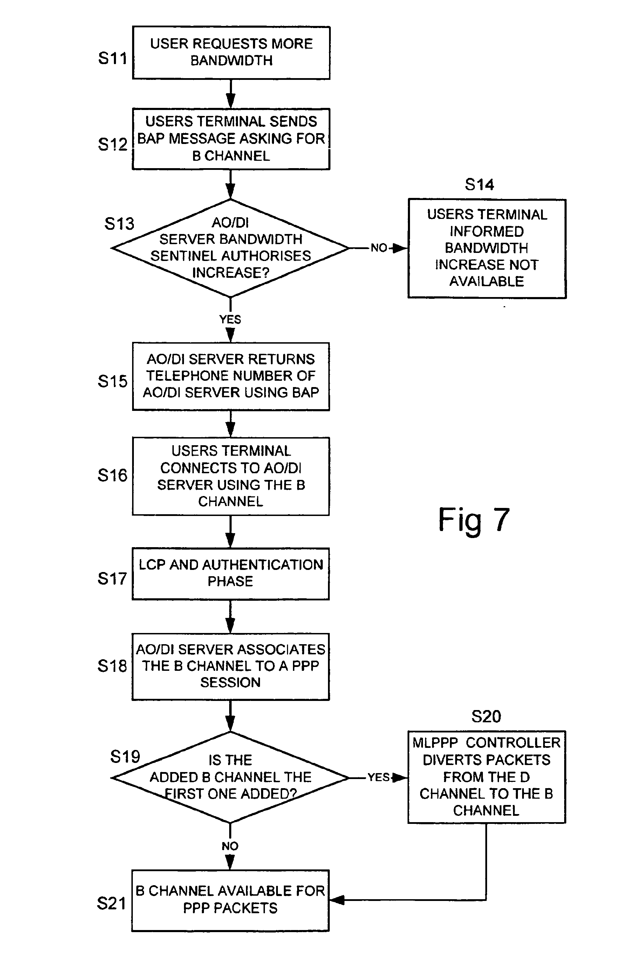

The method of adding bandwidth to a PPP session will now be described in more detail with reference to Figures 7 to 9.

Figure 7 is a flow diagram illustrating the expansion of the PPP bandwidth when a user requests more bandwidth in step S11. In step S12 a users terminal sends a BAP message asking for a B channel. In step S 13 the manager and sentinel 21 in the AO/DI server 12 determines whether to authorise the increase in bandwidth. If not, in step S 14 a users terminal is informed that the bandwidth increase is not available. If the manager and sentinel 21 allows an increase in bandwidth, in step S15 the AO/DI server 12 returns the telephone number of the AO/DI server 12 using BAP. In step S 16 the users terminal then connects a B channel to the AO/DI server using the telephone number. With the physical connection now made, the MLPPP now enters the LCP and authorisation phase in step S 17 as will be described in more detail hereinafter. If the LCP and authorisation phase is successful, the AO/DI server associates the B channel to a PPP session in step S18. In this way the bandwidth available for a PPP session is increased without the ISP being involved. The ISP simply sees an increase in bandwidth in a single link PPP session.

In step S 19 it is then determined whether the B channel which has been added is the first B channel to be added for the PPP session. If so, the MLPPP controller 20 diverts PPP packets from the D channel to the B channel. The reason for this is that the D channel has a higher temporal latency than the B channel and in order to avoid delays, it is more efficient to use the B channel when available. It is thus conventional in AO/DI services to drop the D channel for carrying data when a B channel becomes available.

If in step S 19 it is determined that the B channel is not the first channel to be added, i.e. the D channel is not carrying data, the B channel becomes available for PPP packets in step S21.

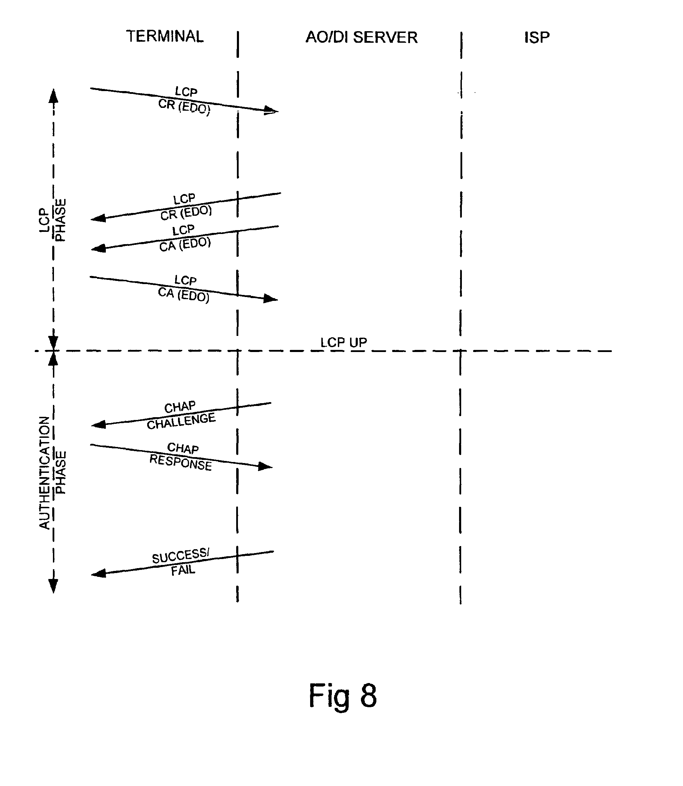

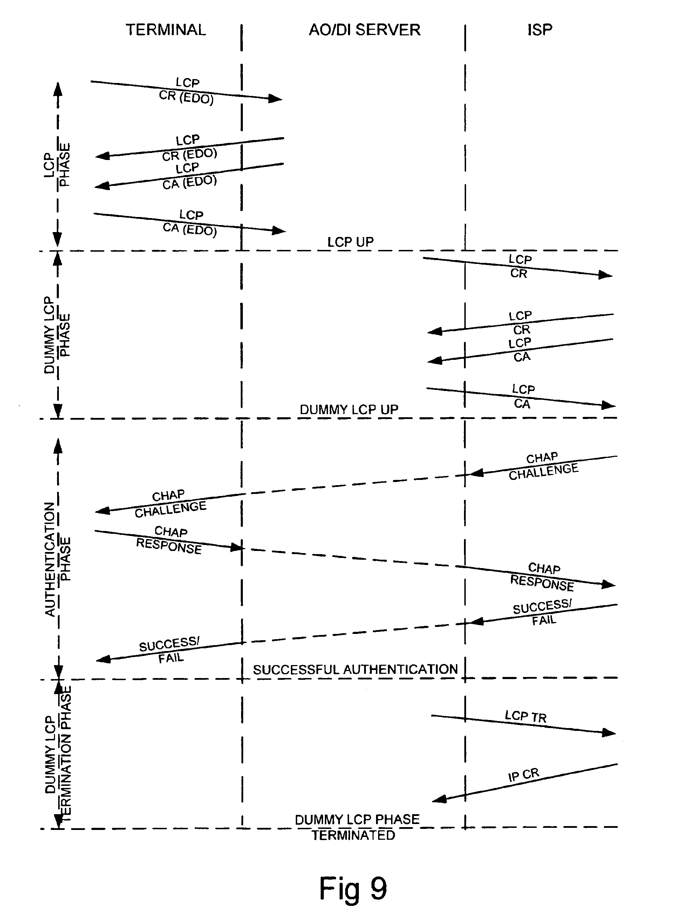

Two alternative methods of carrying out the LCP and authorisation phase of step S17 in Figure 7 will now be described with reference to Figures 8 and 9.

Figure 8 describes a first method for use in the first embodiment wherein the AO/DI server 12 records the LCP data and the CHAP challenge and response used for setting up the first link (D channel) between the terminal and the ISP. The AO/DI server stores the information for use in spoofing a response to the terminal to fool the terminal to believe that the negotiation of the further link has taken place with the ISP.

Referring specifically to Figure 8 the terminal generates an LCP CR which is transmitted to the AO/DI server. The AO/DI server responds with an LCP CA as well as its own LCP CR. In response the terminal responds with an LCP CA in order to set up the LCP phase.

The authentication phase can then be entered and in this phase once the LCP has been set up, the AO/DI server generates a CHAP challenge using the pre-recorded CHAP challenge. The terminal responds with a CHAP response, and the AO/DI server can simply compare the CHAP response with the CHAP response previously sent by the terminal during the set-up of the first member link. So long as the CHAP response is the same, the AO/DI server can respond with the success, otherwise it will respond with fail.

So long as there has been successful authentication of the further member link to be used in the PPP session, the further member link can then be associated with the PPP session (step S 18 of Figure 7).

This method of authentication of further links for a PPP session does not involve the Internet service provider at all and requires the AO/DI server to record the necessary information for negotiation.

A second method of negotiation will now be described with reference to Figure 9. In this method the AO/DI server does not record the authentication information but instead fools the ISP into thinking that the user wishes to set up the second PPP session. This technique requires the ISP to allow a user more than one simultaneous PPP session.

Referring specifically to Figure 9, the terminal generates and transmits an LCP CR to the AO/DI server. The AO/DI server responds with an LCP CR and LCP CA for information recorded during the initialisation of a first member link. The terminal responds with a LCP CA in order to bring the LCP up.

Once the LCP phase has been completed, the AO/DI server enters a dummy LCP phase during which it negotiates a dummy LCP session with the ISP. The AO/DI server generates an LCP CR and transmits to the ISP. The ISP responds with an LCP CA and generates its own LCP CR which is transmitted to the AO/DI server. The AO/DI server responds with an LCP CA and thus the dummy LCP is set up. The ISP will then enter an authentication phase and generate a CHAP challenge which is intended for the new PPP session. However, the AO/DI server simply passes the CHAP challenge on to the terminal. The terminal will respond with a CHAP response which the AO/DI server passes on to the ISP. The ISP then validate the response in order to authenticate the user and return a success or fail which again is passed back to the terminal. Regardless of whether the authentication phase has been successful or not, the AO/DI server will then enter a dummy LCP termination phase during which it terminates the dummy LCP by transmitting an LCP termination request (TR) to which the ISP will respond with a LCP termination acknowledge (TA) which will result in the termination of the dummy LCP. The ISP will simply consider that the user wished to set up a second PPP session but then cancelled it. The terminal would appear to have negotiated a successful PPP session with the ISP.

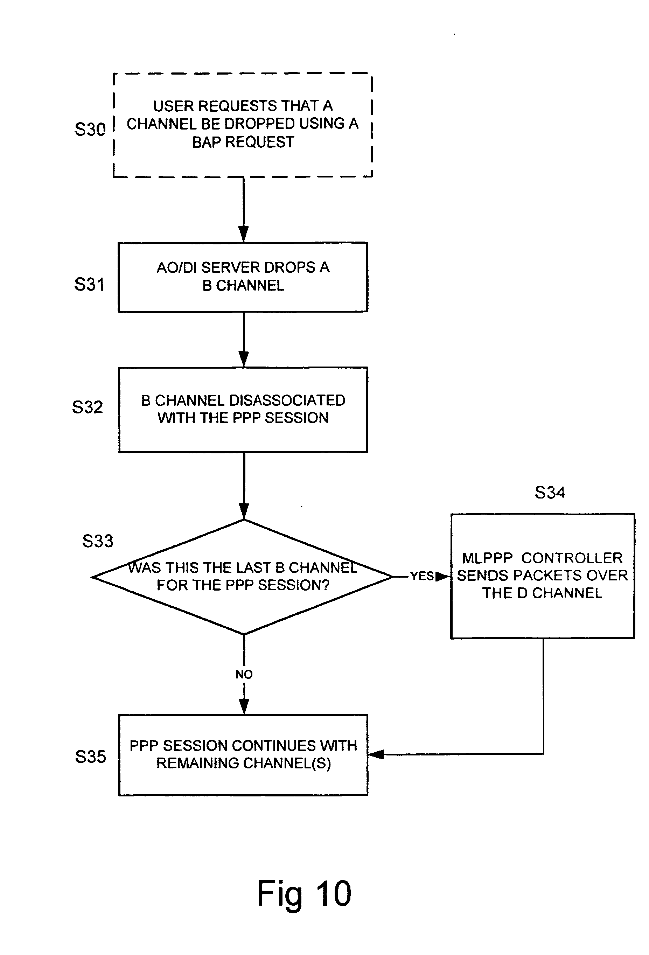

A method of reducing the bandwidth for a communication between the terminal and the ISP will now be described with reference to Figure 10.

This technique can be initiated by an optional request by a user to drop a channel using a BAP request (step S30). In step D31 the AO/DI server 12 drops the channel. This can be either as a result of the users request, or as a result of control by the manager and sentinel 21. In step S32 the B channel is disassociated with the PPP session. In step S33 it is then determined whether this was the last B channel for the PPP session. If so, in step S34 the MLPPP controller 20 sends PPP packets over the D channel and the PPP session continues over the D channel. If in step S33 there are still B channels used.

In this technique, the D channel is never dropped. Only the B channels can be removed from the PPP session. This ensures that the service is always "always on".

The method by which the bandwidth available for a PPP session is controlled by the manager and sentinel 21 will now be described in more detail.

As shown in Figure 3, the ISDN configuration table 24 can include data associated with users. Users can be identified from the LAP D address (Data Link Connection Identifier (DLCI)) and the caller NUA of the X.25 call. In its simplest form, the bandwidth control can be achieved by associating time information with each of the users. For example, certain users may not be able to increase bandwidth i.e. use the B channels at certain times of the time e.g. at peak times. Thus during the PPP session, the manager and sentinel 21 monitors the PPP session and any BAP calls made by a user to request additional bandwidth. The NUA or DLCI of the calls can be compared with the data in the ISP configuration table 24 in order to determine whether to allow the bandwidth to be increased.

In the method of Figure 7 the manager and sentinel 21 can control the bandwidth by not returning the telephone number to allow the B channel to be connected or by sending a negative BAP response to the terminal BAP request.

In an alternative implementation allowed under BACP, a user can request a channel and request call back whereby the AO/DI server 12 calls the user back in order to connect the B channel requested by the user. In order to facilitate this, the user will provide the call back number in the BAP request.

The manager and sentinel 21 will thus be able to control bandwidth allocation in accordance with this latter method by not returning the call or by returning a negative BAP response to the terminal BAP request and thus not setting up the B channel requested by the user.

The manager and sentinel 21 can control the bandwidth using any predefined criteria to ensure that the user has permission to increase the bandwidth.

In addition or alternatively to time information, information on bandwidth being used and total usage can be used to control the bandwidth allocated to users. In this technique, the manager and sentinel 21 monitors the bandwidth an usage by users as communications pass through the controller 20.

The total usage over a period of time, or the bandwidth being used by a user at any specific instance of time can be monitored. For example, a user may pay for a certain total usage e.g. 10 Mbytes and thus the manager and sentinel 21 will monitor the accumulated usage by a user in order to determine when the total usage has been used up.

The bandwidth available to a user can be reduced by disconnecting a channel if the channel has not been used for communications for a predetermined period of time. For example, where the user is connected to the Internet and the Internet is running slowly, the full bandwidth may not be used, and thus the channel can be removed from the PPP session without affecting performance perceived by a user.

Where a user requests additional bandwidth, the manager and sentinel 21 can determine whether to allow the addition of a channel to the PPP session in dependence upon the use being made of any channels currently involved in the communication. For instance, if a user already has one D channel and one B channel assigned to a PPP session and the user requests a second B channel, if the first B channel is not fully utilised, the manager and sentinel 21 can prevent the addition of the channel to the PPP session.

The manager and sentinel 21 can also monitor the temporal latency of channels involved in a PPP session. For example, if the D channel is being used, and data transfer is extremely slow, the manager and sentinel 21 can allow the addition of a B channel to the PPP session.

In the AO/DI server 12, there is provided a limited number of B channels via the ISDN PRI interface 25. Thus, the manager and sentinel 21 can monitor contention by a plurality of users for those channels when all channels are being used. For example, when a user requests the addition of a B channel to a PPP session and no B channels are available, the manager and sentinel 21 can identify a B channel which is either not being used or being used the least and disconnect that channel to provide the new channel for the user. In this way, the manager and sentinel 21 makes the best use of the available B channels into the AO/DI server 12.

Another method by which bandwidth management can take place is based on a service class to which a user subscribes. For example, there can be 20 service classes which are configurable. Each user is then assigned to a particular service class. For instance, if a user is prepared to pay for a premium service class, they will be given bandwidth priority.

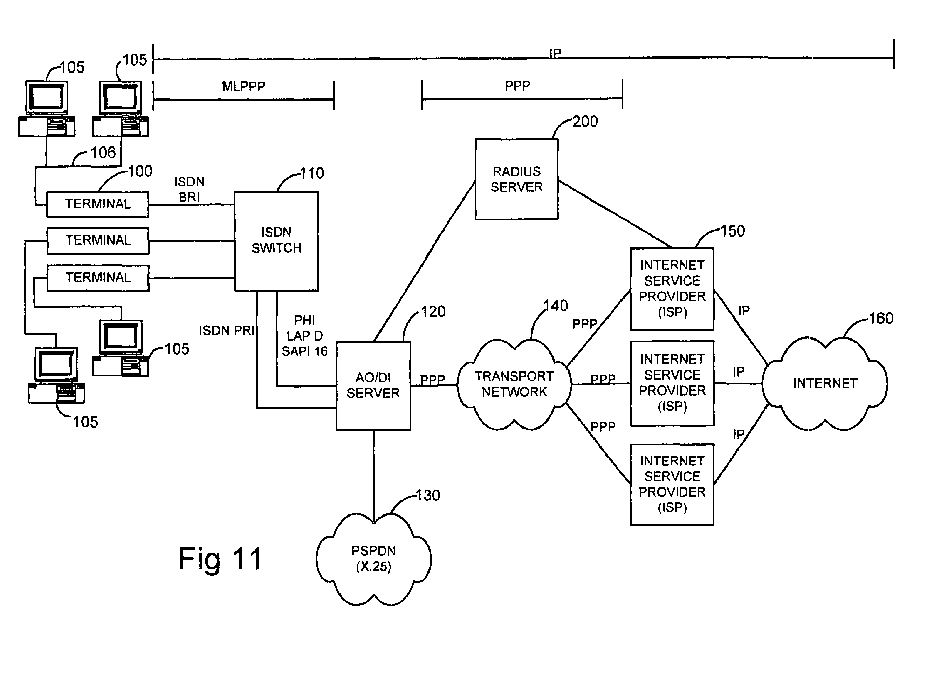

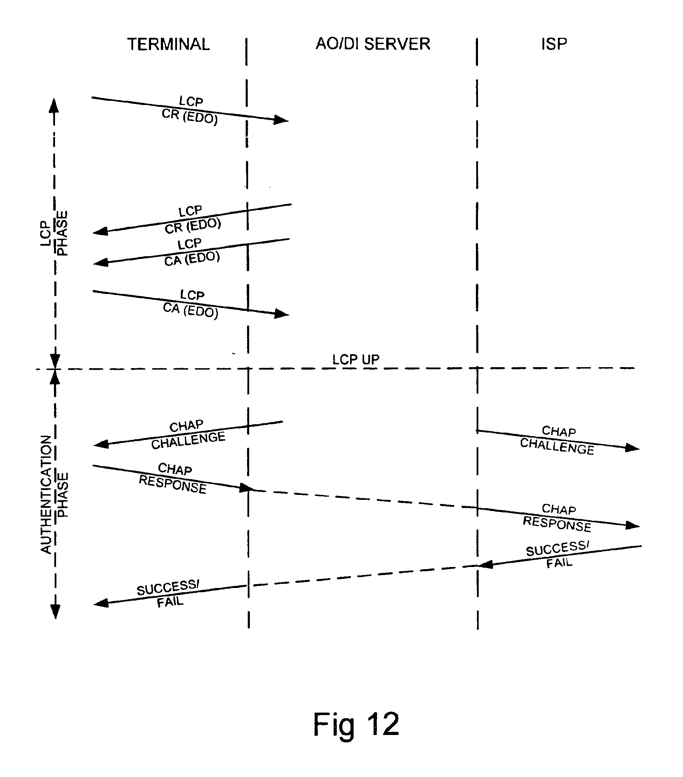

A second embodiment of the present invention will now be described with reference to Figures 11 and 12.

This embodiment of the present invention is similar to the first embodiment in that a plurality of terminals 100 are connected via ISDN BRI lines to an ISDN switch 110. Each terminal 100 is connected to at least one computer 105. The terminals 100 can comprise an ISDN router in which case a local area network (LAN) 106 links a plurality of computers 105 to the router 100 to provide access to the ISPs. The protocol used for communication over the LAN can comprise IP over Ethernet. Alternatively the terminals 100 can comprise ISDN modems in which case they are connected to single computers 105. The communication between the modem and the computer can be via PPP. Thus a single large bandwidth channel is used for communication between the computer(s) and the terminal. The terminal then splits this over the multiple channels provided by the ISDN BRI lines.

The ISDN switch 110 provides D channel data to an AO/DI server 120 using the LAP D level 2 protocol with the X.25 level 3 protocol overlaid. The B channels are output from the ISDN switch 110 to the AO/DI server 120 over an ISDN PRI line. The AO/DI server 120 switches D channel data not intended for the ISPs 150 to a PSPDN 130. As for the first embodiment, the MLPPP is terminated by the AO/DI server 120.

The AO/DI server 120 connects to the ISPs 150 using PPP over a transport network 140. Once again this transport network can comprise any network which can carry PPP e.g. Ethernet, ATM, L2TP and FR. Thus the AO/DI server 120 communicates with the ISPs 150 using PPP. The ISPs communicate with the Internet 160 using IP and to provide IP between the terminals and the Internet.

This embodiment to the present invention differs from the first embodiment to the present invention in that the AO/DI server 120 can access a radius server 200 for authentication purposes. Conventionally, the ISPs 150 have access to the radius server 200 in order to perform authentication of username and password.

The reason for the provision of the connection of the radius server 200 in this embodiment is to enable a different type of authentication to take place for further links to be set up for a PPP session.

Figure 12 illustrates the LCP phase and the authentication phase for subsequent links in this embodiment.

The terminal generates an LCP CR which is transmitted to the AO/DI server. The AO/DI server responds with an LCP CA and its own LCP CR. The terminal then responds with an LCP CA and the LCP phase is completed.

In the authentication phase, the AO/DI server transmits a CHAP challenge to the terminal. The CHAP challenge is generated by the AO/DI server. The CHAP response from the terminal is transmitted through the AO/DI server to the radius server 200 together with the CHAP challenge which was transmitted to the terminal. The radius server uses the CHAP response to look up the unique key for the user. This can be used in conjunction with the CHAP challenge to generate the expected CHAP response. The expected CHAP response can then be completed compared with the received CHAP response to determine whether the authentication is valid or not. If it is valid, a success is transmitted through the AO/DI server to the terminal and if not a fail is transmitted.

Thus in this embodiment the AO/DI server need not record the CHAP during the setting up of the initial member link. This technique is thus more secure but relies on a connection to the radius server 200.

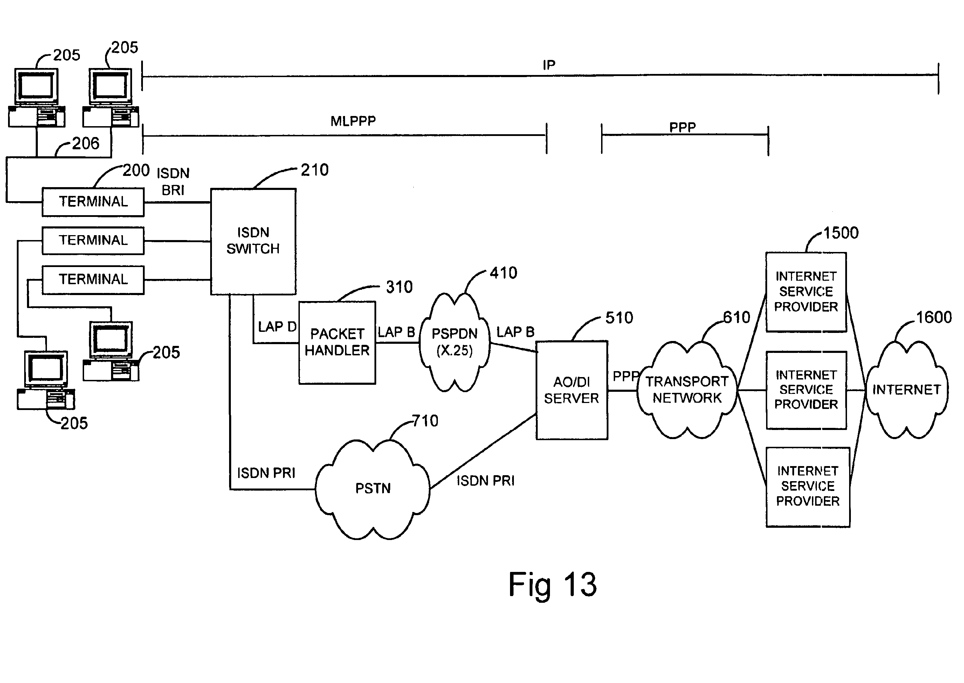

A third embodiment of the present invention will now be described with reference to Figure 13.

This embodiment of the present invention differs from the first and second embodiment in that the AO/DI server 510 does not receive the LAP D output of the ISDN switch and instead receives the D channel data after having passed over the PSPDN 410.

In this embodiment the plurality of terminals 110 are connected via ISDN BRI lines to an ISDN switch 210. Each terminal 200 is connected to at least one computer 205. The terminals 200 can comprise an ISDN router in which case a local area network (LAN) 206 links a plurality of computers 205 to the router 200 to provide access to the ISPs. The protocol used for communication over the LAN can comprise IP over Ethernet. Alternatively the terminals 200 can comprise ISDN modems in which case they are connected to single computers 205. The communication between the modem and the computer can be via PPP. Thus a single large bandwidth channel is used for communication between the computer(s) and the terminals. The terminals then split this over the multiple channels provided by the ISDN BRI lines.

The D channel data is output from the ISDN switch 210 using a LAP D level 2 protocol overlaid with a X.25 level 3 protocol. This is received by a packet handler 310 which outputs data in an X.25 level 3 protocol overlaying a LAP B level 2 protocol. This is carried over the PSDN 410 before reaching the AO/DI server 510.

The ISDN switch 210 outputs the B channel data over an ISDN PRI line which is passed through the PSTN 710 in order to reach the AO/DI server 510.

The AO/DI server 510 operates as described hereinabove with reference to the previous embodiments to terminate the MLPPP and communicate with the Internet service providers 1500 using PPP over a transport network 610 e.g. Ethernet, ATM or FR. The ISPs 1500 communicate with the Internet 1600 using IP and to provide IP between the terminals and the Internet.

Thus this embodiment of the present invention differs from the previous embodiments in that the AO/DI server does not directly receive the D channel output from the ISDN switch. Instead the conventional X.25 PSPDN 410 is used. Thus the AO/DI server is required to terminate the LAP B level 2 protocol instead of the LAP D level 2 protocol as described in the previous embodiments. Otherwise, the operation of the AO/DI server 510 is the same.

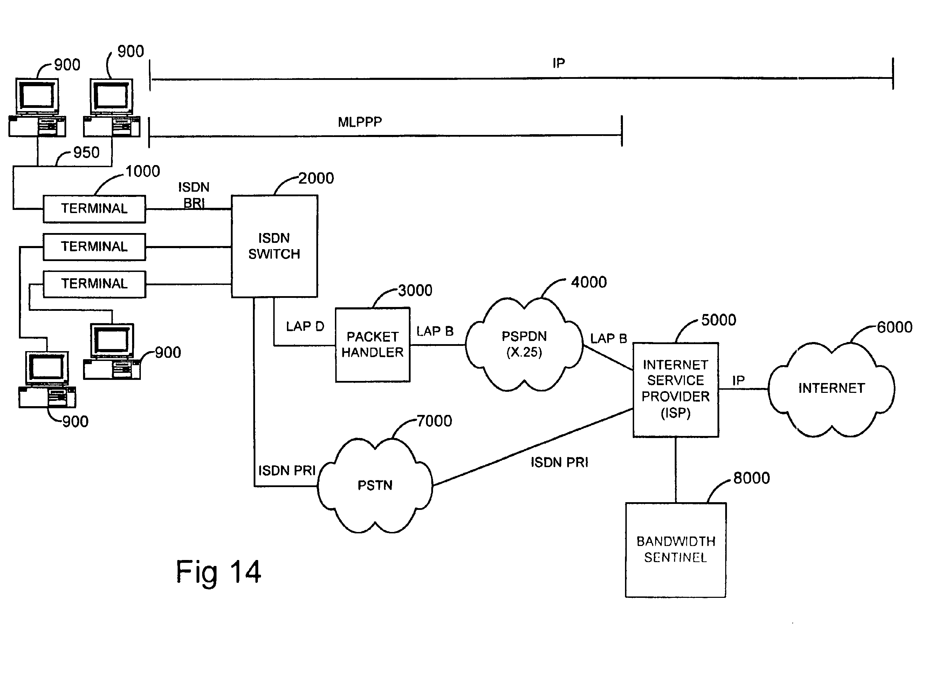

A method of bandwidth control will now be described with reference to Figure 14.

This illustrative arrangement provides for bandwidth control in a conventional AO/DI service.

A plurality of terminals 1000 are connected via ISDN BRI lines to an ISDN switch 2000. Each terminal 1000 is connected to at least one computer 900. The terminals 1000 can comprise an ISDN router in which case a local area network (LAN) 950 links a plurality of computers 900 to the router 100 to provide access to the ISPs. The protocol used for communication over the LAN can comprise IP over Ethernet. Alternatively the terminals 1000 can comprise ISDN modems in which case they are connected to single computers 900. The communication between the modem and the computer can be via PPP. Thus a single large bandwidth channel is used for communication between the computer(s) and the terminals. The terminals then split this over the multiple channels provided by the ISDN BRI lines.

The D channel data output from the ISDN switch 2000 is output using a LAP D level 2 protocol overlaid with an X.25 level 3 protocol which is received by a packet handler 3000. The packet handler 3000 outputs the data over a LAP B level 2 protocol overlaid by an X.25 level 3 protocol. This is transported over the X.25 PSPDN 4000 to the ISP 5000. In this way the ISP is provided with the D channel data as in conventional AO/DI.

The ISDN switch 2000 also outputs the B channels over an ISDN PRI line. This passes through the PSTN 7000 to the ISP 5000.

The ISP then provides the conventional AO/DI service and connects the Internet 6000 using IP. This embodiment of the invention differs from the conventional AO/DI in that a bandwidth sentinel 8000 is provided. The bandwidth sentinel 8000 performs bandwidth management on the multi channel communications provided between the ISP 5000 and the terminals 1000. The bandwidth sentinel 8000 can perform all the functions as described hereinabove with reference to the manager and sentinel 21 in the previous embodiments and provides all the advantages described regarding the manager and sentinel 21. This embodiment of the present invention does not require the provision of the AO/DI server between the ISP and the terminals.

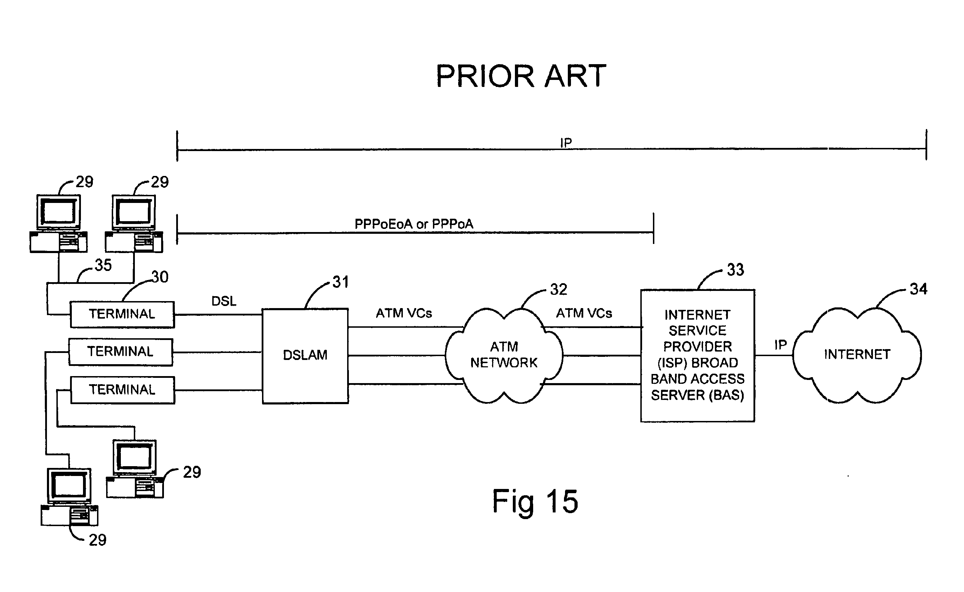

Figure 15 is a schematic diagram of a communication system for providing communications to an Internet Service Provider 33 using DSL links. Terminals 30 are provided which provide digital subscriber lines (DSLs) to a digital subscriber line access multiplexor (DSLAM) 31. The terminals 30 can comprise a DSL modem in which case they are connected to a single computer 29 and can receive data by PPP or PPPoE. Alternatively, the terminals 30 can comprise DSL routers which are connected via a local area network 35 to a plurality of computers 29. Once again, the protocol for communication between the terminals 30 and the computers 29 can be IP over ethernet or PPPoE.

The DSLAM 31 terminates the DSL lines and provides an interface to an asynchronous transfer mode (ATM) network 32. Also connected to the ATM network 32 is the Internet Service Provider (ISP) 33 which includes a broad band access server (BAS). The ATM network 32 provides ATM virtual circuits (ATM VC) between the DSLAM 31 and the BAS of the ISP 33. Each user connected from a computer 29 via a terminal 30 and a single DSL line will be connected to the ISP 33 via a single ATM VC. The protocol used for providing the communications from the terminal 30 to the ISP 33 is PPPoEoA or PPPoA. Thus each user using computer 29 will be provided with a direct single link protocol connection via the terminal 30 to the ISP 33. The ISP 33 connects to the Internet 34 using the level 3 protocol IP to provide IP between the terminals and the Internet.

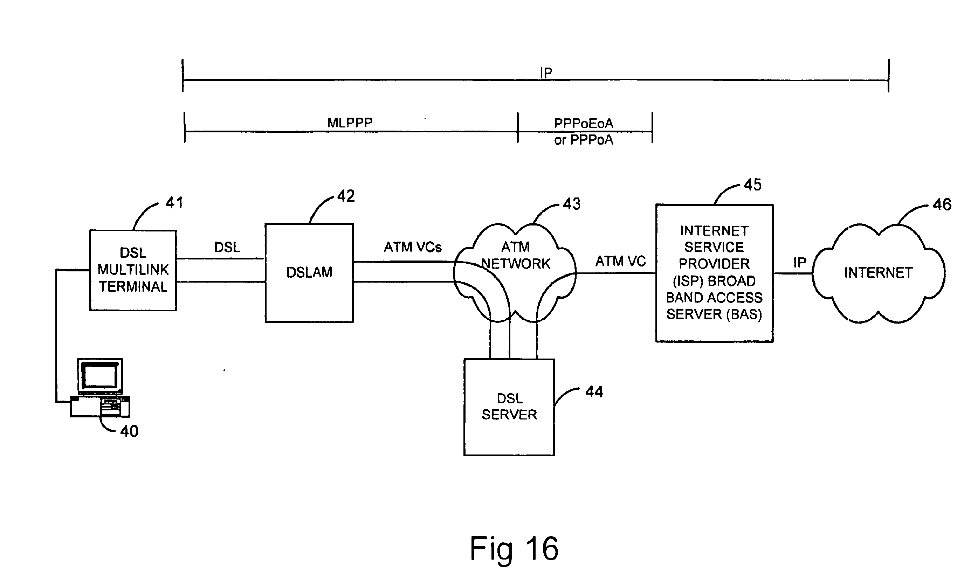

A fourth embodiment of the present invention will now be described with reference to Figure 16. In this embodiment of the present invention, the concept of using a multi-link protocol is applied to DSLs.

As can be seen in Figure 16, a DSL terminal 41 is provided connected by two DSL lines to the DSLAM 42. Although in this embodiment two DSL lines are illustrated as being used as the multiple channels between the DSL multi-link terminal 41 and the DSLAM 42, any number of DSL lines can be used as the multi-links.

A computer 40 is connected to the DSL multi-link terminal 41 for use by a user. The DSL multi-link terminal 41 can comprise a DSL modem or a DSL router with the ability to multi-link the data using multi-link PPP (MLPPP) over multiple DSL lines. The connection between the DSL multi-link terminal 41 and the computer 40 can be via any conventional link such as a local area network or a direct connection. Thus, the protocol used for communication between the computer 40 and the DSL multi-link terminal can be any PPP protocol such as PPPoE, PPPoA or PPPoEoA in the case of the modem and IP in the case of the router.

The DSLAM 42 terminates the DSL lines and connects to an ATM network 43. A DSL server 44 is provided to which two ATM VCs output from the DSLAM 42 are routed by the ATM network 43. Thus two virtual channels are provided directly from the DSL multi-link terminal 41 to the DSL server 44 and the MLPPP protocol is used.

At the DSL server 44 the MLPPP protocol is converted to the PPP protocol and a large bandwidth ATM VC is provided via the ATM network to the BAS of the ISP 45. Thus the ISP 45 receives a standard link PPP connection: one PPP session per user. The PPP session has a much larger bandwidth than can be provided for by a single DSL line made available to the user.

The ISP 45 outputs IP over the Internet 46 to provide IP between the computer 40 and the Internet.

It can be seen from this embodiment of the present invention that like the first to third embodiments of the present invention, the multi-link protocol is terminated at a server and converted into PPP so that the ISP only needs to receive a single link PPP session for each user.

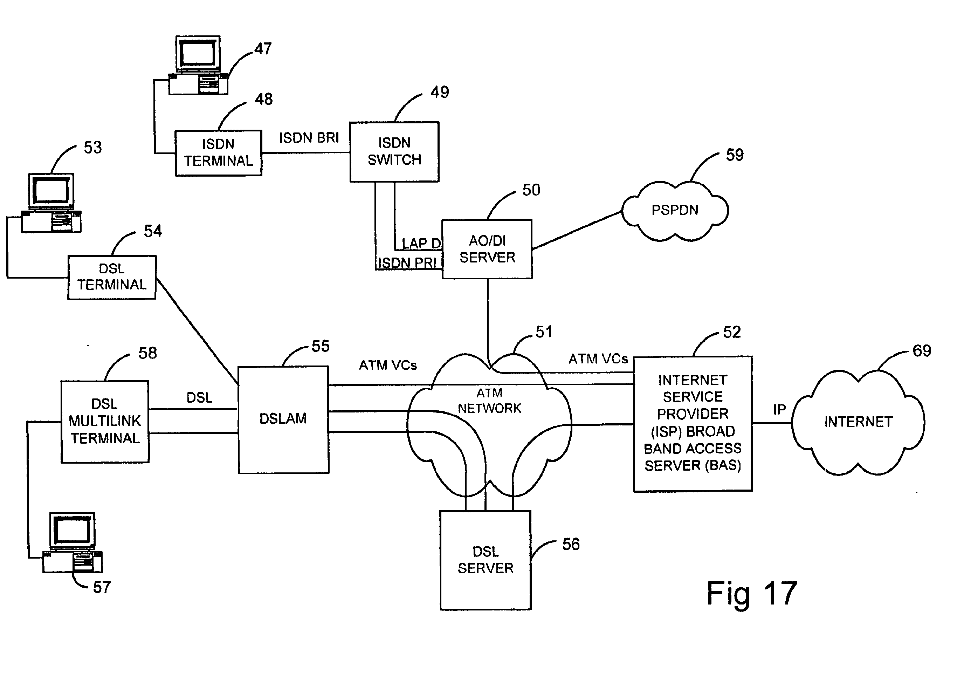

Because the BAS of the ISP is not modified, the fourth embodiment of the present invention can be used in conjunction with the prior art DSL service of Figure 15 and the AO/DI service of anyone of the first to third embodiments of the present invention.
Such a composite system is illustrated in Figure 17.

In Figure 17 a conventional DSL service is provided to the user of a computer 53 who is connected via a DSL terminal 54 over a single DSL line to the DSLAM 55. The DSLAM 55 forms a single ATM VC via the ATM network 51 to the BAS of the ISP 52.

A broad band DSL service is provided to the user of computer 57. The computer 57 is connected to a DSL multi-link terminal 58 which is connected via two DSL lines to the DSLAM 55. The DSLAM 55 provides two ATM VCs via the ATM network 51 to a DSL server 56. Thus multi-link communication is provided between the DSL multi-link terminal 58 and the DSL server 56 and the protocol MLPPP is used. The DSL server 56 has a large band ATM VC via the ATM network 51 to the BAS of the ISP 52.

User of computer 47 is provided with a AO/DI service via ISDN BRI lines. The computer 47 is connected to a ISDN terminal 48 which is connected via a ISDN BRI line to an ISDN switch 49.

As described with reference to the first embodiment of the present invention, the D channel data is output over a packet handler interface using the LAP D level 2 protocol to the AO/DI server 50. Also a ISDN PRI line is provided from the ISDN switch 49 to the AO/DI server 50 to provide a number, i.e. 30 in Europe and 24 in USA, of B channels which comprise channels between a number of terminals like ISDN terminal 48 and the ISP 54. Communications take place between the terminal 48 and the AO/DI server 50 using the MLPPP. The AO/DI server 50 terminates the MLPPP, the LAP D protocol, and the ISDN lines. The AO/DI server 50 is also connected to a PSPDN 59 to route out X.25 traffic received over the D channel which is not intended for the ISP 54.

Data is passed between the AO/DI server 50 and the ISP 52 using PPP over an ATM VC via the ATM network 54.

The ISP 52 communicates with the Internet 69 using IP to provide IP between the computers 47, 53 and 57 and the Internet.

It can be seen from Figure 17 that the BAS within the ISP 52 is able to communicate with any of the computers 47, 53 or 57 using any of the access methods simply by receiving a PPP session over a communication network of variable bandwidth. Thus the BAS need only have the capability of receiving a PPP session of any fixed or variable bandwidth. The ISP need not deal with the X.25 protocol, the LAP D protocol, MLPPP, or any other communication protocol other than PPP which is conventionally handled by the BAS.

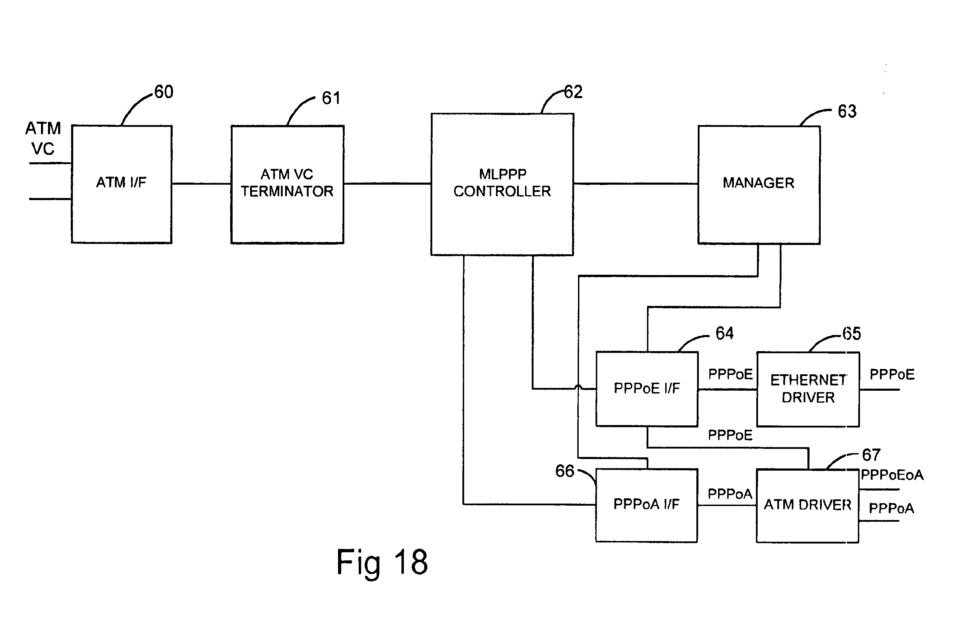

Figure 18 is a schematic diagram illustrating the structure of the DSL server 44 or 56 in more detail. The modules illustrated in Figure 18 can be implemented either partly or wholly in software.

As can be seen in Figure 18, the ATM VCs are input to a ATM interface 60. An ATM VC terminator 61 receives the ATM data and terminates the ATM VCs. The MLPPP data carried over the ATM VCs is then input into a MLPPP controller 62. A manager 64 looks at the ISP domain name in the PPP packets received by the MLPPP controller 62 to decide where the data is to be sent i.e. to which ISP. The manager 63 also determines which output protocol is to be used. The single PPP session can be output as PPPoE, PPPoEoA or PPPoA. If the output is to be PPPoE, the manager controls a PPPoE interface 64 to generate PPPoE. This is controlled by the manager 63 either to be output to an ethernet driver 65 to generate PPPoE, or the PPPoE is output to a ATM driver 67 to generate PPPoEoA as the output. Alternatively, the manager controls a PPPoA interface 66 to generate PPPoA which is input to the ATM driver 67 to generate a PPPoA output.

Thus the DSL server illustrated in Figure 18 operates to aggregate input MLPPP data to provide a single PPP output session. Also in reverse, the DSL server operates to split an input PPP session across multiple channels as an MLPPP session.

In this embodiment of the present invention, unlike the first to third embodiments, no bandwidth sentinel is required. In the DSL access service, the bandwidth provided is not variable. A user is provided with a fixed bandwidth comprising the required number of DSL lines.

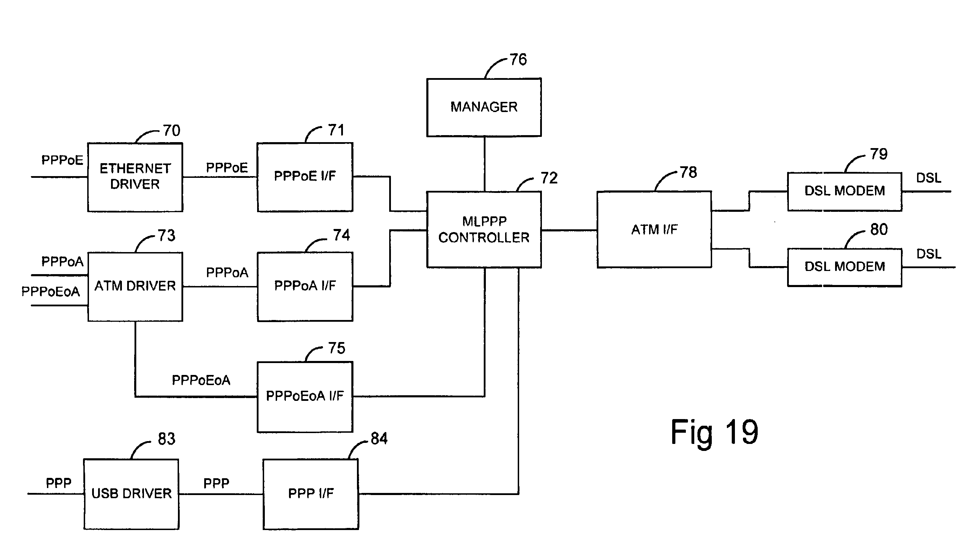

Figure 19 is a schematic diagram illustrating the structure of the terminal 41 or 58 in accordance with the fourth or fifth embodiments of the present invention, in which the terminal comprises a modem.

The input to the modem can be a PPPoE protocol which is received by an ethernet driver 70. The PPPoE data is then input to a PPPoE interface 71 which terminates the ethernet protocol and the PPP packets are passed to a MLPPP controller 72.

If the data is received as PPPoA from the computer, this is received at an ATM driver 73 and passed to a PPPoA interface 74. The PPPoA interface 74 terminates the ATM protocol and outputs the PPP packets to the MLPPP controller 72. If the data is received as PPPoEoA, it is input to the ATM driver 73 and output to a PPPoEoA interface 75 which terminates the protocol and outputs the PPP packets to the MLPPP controller 72. A USB driver 83 is also provided to allow a USP connection over which PPP is input. The PPP is output from the USB driver 83 to a PPP interface 84. The PPP is then output to the MLPPP controller 72. A manager 76 is provided to manage the MLPPP controller 72 to identify where the PPP packets are to be sent. The MLPPP generates the MLPPP session as MLPPP packets which are received by an ATM interface 78. The ATM interface 78 generates two virtual circuits, one for each channel required and the data for each channel is output to a respective DSL modem 79 and 80 for output over the DSL lines. Thus the communication by the terminal over the DSL lines is by MLPPP and the communication with the computer(s) is by PPP.

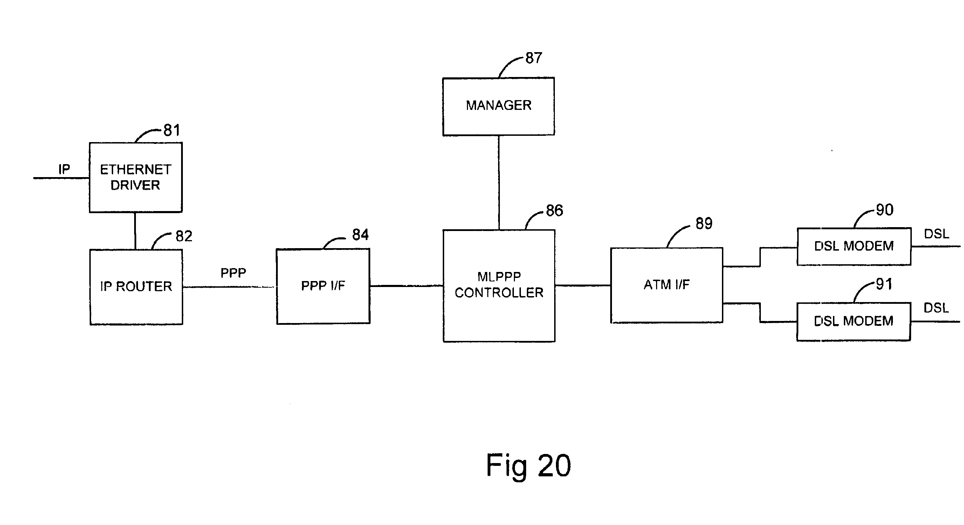

Figure 20 is a schematic diagram illustrating the structure of a terminal 41 or 58 in the fourth or fifth embodiments of the present invention in accordance with another embodiment of the present invention. In this embodiment, the terminal comprises a DSL router.

The router receives data as IP packets over an ethernet link at an ethernet driver 81. The IP packets are passed to an IP router 82 which outputs PPP data which is output to PPP interface 84. The interface 84 terminates the protocol and outputs PPP packets to the MLPPP controller 86. The MLPPP controller converts the PPP single link protocol into MLPPP. A manager 87 determines the address to which the PPP packets are to be directed i.e. the ISP to which the packets are to be directed from the address in the PPP packets. The MLPPP packets output from the MLPPP controller 86 are input to a ATM interface 89 which generates two virtual circuits to act as the two channels to be used for the multi-link protocol. The MLPPP output of the ATM interface 89 is input to two DSL modems 90 and 91 respectively.

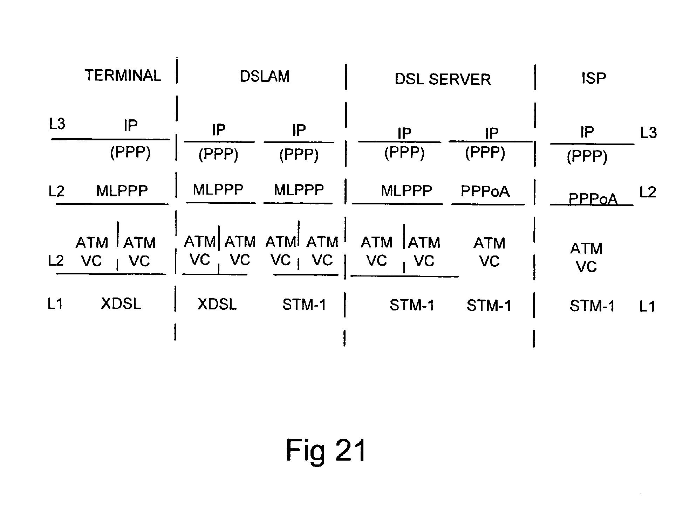

Figure 21 illustrates the levels of the communications between the terminals and the ISP in the fourth embodiment of the present invention. In this embodiment of the present invention ATM VCs are used for the level 2 between the terminal and the ISP. Thus the DSL lines provide transport for ATM VCs between the terminals and the DSLAM. In Figure 21 the physical layer between the DSLAM and the ISP comprises the STM-1. As an alternative OC3 could be used.

On top of the physical layer 1, the layer 2 ATM VC protocol is used to provide two virtual circuits between the terminal and the DSL server. On top of the layer 2 ATM VCs the level 2 MLPPP is encapsulated. The level 2 MLPPP carries level 3 IP data.

Within the DSL server the two ATM VCs are terminated. Also the MLPPP protocol is terminated and the PPP packets with a session are output as PPPoA over a single broad band ATM VC.

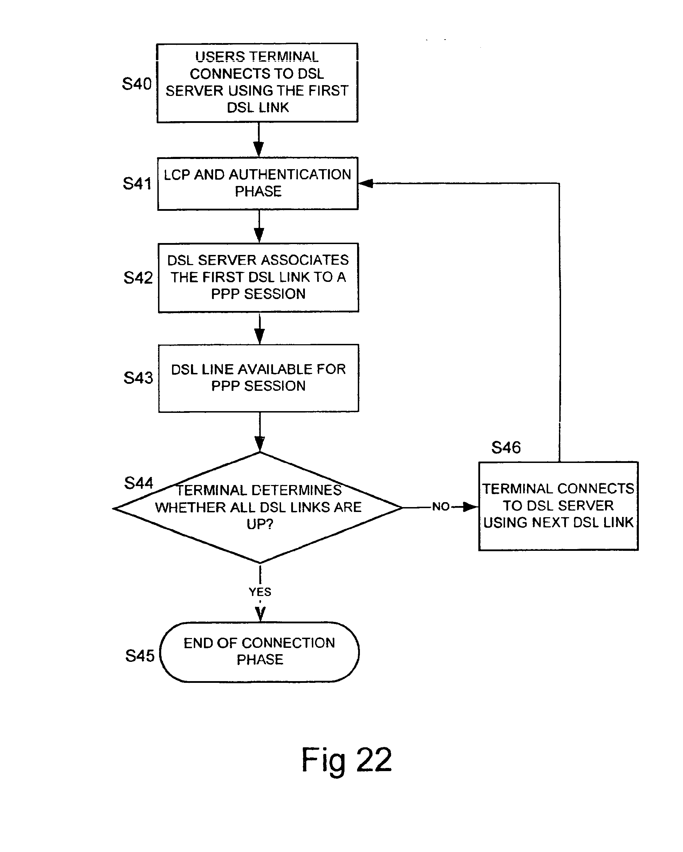

A method of connecting the multi-link DSL service will now be described with reference to the flow diagram of Figure 22.

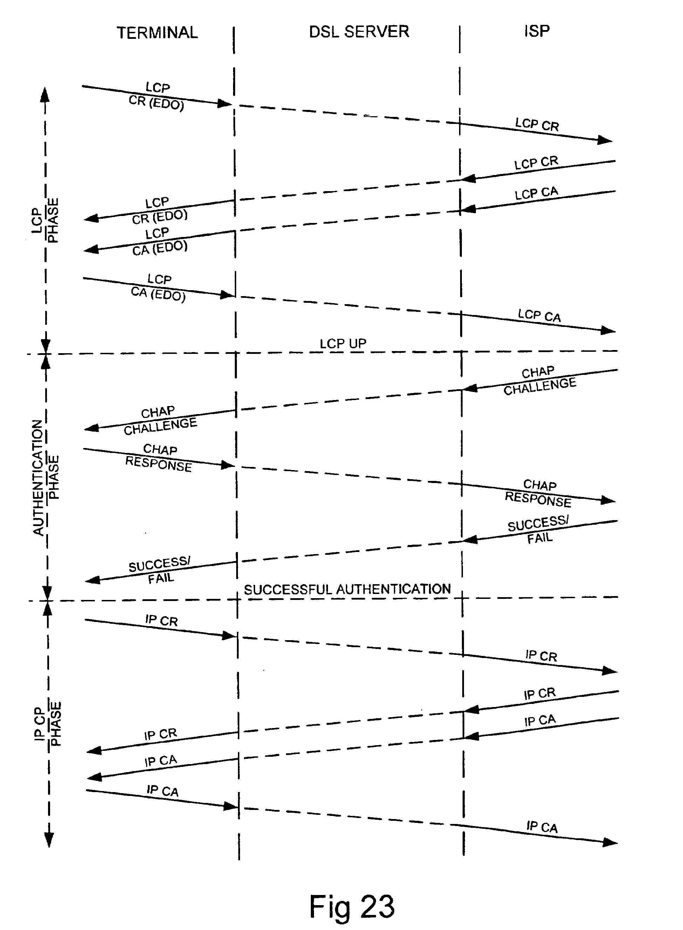

In step S40 the user's terminal connects to the DSL server using the first DSL link. In step S41 a link control protocol (LCP) and authentication phase for the DSL link is then entered as will be described in more detail with reference to Figure 23. Assuming successful authentication, in step S42 the DSL server associates the first DSL link to the PPP session. In step S43 the DSL link then becomes available for the PPP session. It is then determined in step S44 by the terminal whether all the DSL links available to it are up. If not, in step S46 the terminal connects to the DSL server using the next DSL link and the process returns to step S41 to enter the LCP and authentication phase for the next DSL link.

When it is determined in step S44 that all DSL links are up, instep S45 the end of the connection phase is reached and all of the DSL links are now available for the PPP session thus providing the user with the full bandwidth available.

Figure 23 illustrates the phases of setting up the first PPP session in more detail.

MLPPP comprises three phases:
i) a link control protocol (LCP) phase;
ii) an authentication phase; and
iii) an Internet protocol control protocol (IP CP) phase.

MLPPP differs from PPP in that MLPPP has multiple links. Thus more control is required and thus the protocol includes an extension to the parameters negotiated during the LCP phase. Further, for MLPPP, the authentication phase requires an authentication for each channel as it is added to a MLPPP session. Thus the DSL server operates as an interface between the MLPPP and the PPP and thus, as can be seen in Figure 23, during the initial setting up of the broad band DSL service, i.e. during the setting up of the first member link, it acts transparently.

When a user wishes to set up a broad band DSL session, during the LCP phase, an LCP configuration request (LCP CR) is carried by the MLPPP end point discriminator option (EDO). The LCP CR is passed by the DSL server to the ISP. The ISP responds to the configuration request with a configuration acknowledge (CA) and with its own configuration request. These are not passed transparently through the DSL server to the terminal since the DSL server adds or removes MLPPP options to the LCP requests and responses depending upon the direction of transfer. The terminal responds to the configuration request from the IP with a configuration acknowledge which once again is passed through the DSL server to the ISP.

Although in Figure 23 each configuration request is responded to with a configuration acknowledge, the configuration negotiation between the terminal and the ISP may take the form of several configuration refusals from either the terminal or the ISP before the configurations are accepted. Once both the terminal and the ISP have acknowledged configuration requests, the LCP phase is completed and the link control protocol is up.

The process then enters the authentication phase. The ISP then generates a challenge handshake authentication protocol (CHAP) challenge which comprises a randomly generated number. This is passed by the DSL server to the terminal which responds with a CHAP response which is passed to the ISP. The CHAP response is once again a number which is generated using the CHAP challenge and the user's unique key. The CHAP response also includes the user's surname. Thus the ISP is able to use the user's username to look up the user's unique key and generate the expected CHAP response. If it agrees with the received response, the ISP returns an authentication success signal or else it returns a fail signal. Assuming that authentication has been successful, the process will then enter the IP CP phase. If authentication has not been successful, the connection will be dropped.

In the IP CP phase parameters to be used for the IP are negotiated e.g. IP address. Thus the terminal generates an IP configuration request (IP CR) which is transmitted to the ISP transparently. The ISP returns with a configuration acknowledge and its own configuration request which are passed to the terminal. The terminal responds with a configuration acknowledge to the ISP and thus the PPP session is successfully negotiated and set up. It will be understood that during the negotiation of the IP CP, there may be several configuration requests passed between the terminal and the ISP before the IP CP is successfully negotiated.

It can thus be seen in Figure 23 that during PPP authentication for an initial link the DSL server acts as transparently to pass on the PPP configuration data.

Once a PPP session has been initiated, the remaining DSL links can be brought up as described with reference to the flow diagram of Figure 22.

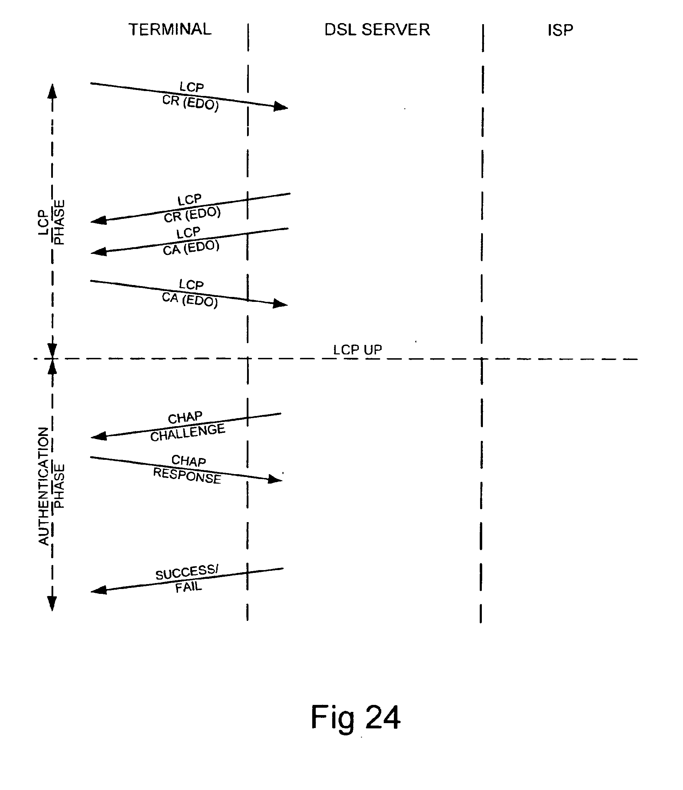

Figure 24 illustrates a method of carrying out the LCP and authentication phase for additional DSL links. In this method the DSL server records the LCP data and the CHAP challenge and response used for setting up the first DSL link between the terminal and the ISP. The DSL server stores the information for use in spoofing a response to the terminal to fool the terminal to believe that the negotiation for the further link has taken place with the ISP.

Referring specifically to Figure 24, the terminal generates an LCP CR which is transmitted to the DSL server. The DSL server responds with an LCP CA as well as its own LCP CR. In response the terminal responds with an LCP CA in order to set up the LCP phase.

The authentication phase can then be entered and in this phase once the LCP has been set up, the DSL server generates a CHAP challenge using the pre-recorded CHAP challenge. The terminal responds with a CHAP response and the DSL server can simply compare the CHAP response with a CHAP response previously sent by the terminal during the set-up of the first member link. So long as the CHAP response is the same, the DSL server can respond with success, otherwise it will respond with fail.

So long as there has been successful authentication of the further member link to be used in the PPP session, the further member link can then be associated with the PPP session as described hereinabove with reference to the flow diagram of Figure 22.

This method of authentication for further links or a PPP session does not involve the ISP at all and requires the DSL server to record the necessary information for negotiation.

Although the present invention has been described hereinabove with reference to specific embodiments, it will be apparent to a skilled person in the art that the present invention is not limited to those embodiments. Modifications can be made within the scope of the present invention as claimed, as will be clear to a skilled person in the art. The present invention is not limited to the use of ISDN or DSL for the communications between the terminals and the ISPs. Any convenient communication channels can be used such as analog communication channels. Further, although the embodiments have been described hereinabove with reference to an ISDN BRI line provided for a user for multi channel access, the present invention is not limited to three channels. Any number or type of channels can be used for the multi link communication. For example, analog and ISDN communication channels can be used.

Further, the present invention is not limited to an always on service. The present invention is generally applicable to any multi channel access service.

Although the always on service described with reference to the first to third embodiments has been described with reference to the use of the conventional AO/DI service which utilises the D channels, the present invention is equally applicable to the use of a frame relay link as the permanent connection.

The embodiments to the present invention have been described with reference to accessing the Internet as the service. The present invention is not limited to accessing the Internet. The service which can be accessed can comprise any type of service and includes an extranet or an intranet.

In the embodiments described hereinabove, the transport network between the AO/DI server and the ISP can comprise any system for communicating single streams of data packets between the intermediate server and the ISP e.g. frame relay, Ethernet, ATM, a layer 2 tunnelling protocol such as L2TP, or leased line i.e. any line which allows for a large bandwidth communication channel.

In the embodiments the multi link protocol comprises the MLPPP and the single link protocol comprises PPP. The second aspect of the present invention is not limited to the specific protocols and encompasses any equivalent point-to-point protocol.

The third aspect of the present invention, is not limited to the use of an intermediate AO/DI server. The second aspect can be used with a conventional AO/DI service provided by an ISP. This is of particular benefit when the ISP has interest in controlling the bandwidth usage e.g. when ISP is also a Telco.

With regard to the third aspect to the present invention, the data associated with the user for controlling bandwidth need not be provided with the controller but can instead be provided remotely and accessed over a communication line.

Although in the embodiments specific authentication protocols have been referred to e.g. CHAP, the present invention is applicable to any authentication protocol e.g. Password Authentication Protocol (PAP).

## Claims

1. A method of communicating between a plurality of terminals (10) and a service provider apparatus (15) via a communication apparatus (2), the method comprising:
communicating over multiple channels between the terminals (10) and the communication apparatus (12) using a multi link point-to-point protocol;
communicating over a single channel between said communication apparatus (12) and said service provider (15) apparatus using a single link point-to-point protocol; and
at said communication apparatus (12), aggregating communications received from the terminals (10) in said multi link point-to-point protocol to said single link point-to-point protocol for communication to said service provider apparatus (15) and splitting communications received from said service provider apparatus (15) in said single link point-to-point protocol to said multi link point-to-point protocol for communication to said terminals (10) the communication apparatus providing the service provider apparatus with a separate single link point-to-point session for communication with each respective terminal, whereby a separate point-to-point session is provided between the service provider apparatus and each respective terminal (10).

2. A method according to claim 1, including controlling the bandwidth allocated for communications by controlling the number of said multiple channels to be used for communication between one of said terminals (10) and said communication apparatus (12), wherein said single channel between said communication apparatus (12) and said service provider apparatus (15) is of variable bandwidth.

3. A method according to claim 2, wherein the bandwidth allocated for communication between one of said terminals (10) and said service provider apparatus (15) is controlled at said communication apparatus (12) in accordance with predetermined criteria for a user of said terminal (10).

4. A method according to claim 3, wherein said predetermined criteria includes information on a service subscribed to by the user.

5. A method according to any one of claims 2 to 4, including monitoring and recording the bandwidth usage by a user of one of the terminals (10), and the bandwidth is controlled dependent upon the recorded bandwidth usage.

6. A method according to any one of claims 2 to 5, wherein the bandwidth allocated for communications between the terminals (10) and a service provider apparatus (15) is controlled dependent upon contention between users of said terminals (10) for channels between said terminals (10) and said communication apparatus (12).

7. A method according to any preceding claim, wherein said multiple channels comprise at least one ISDN D channel and at least two ISDN B channels which terminate at said communication apparatus (12).

8. A method according to claim 7, wherein said communication over said multiple channels takes place via an ISDN switch (11) connected to a plurality of said terminals (10) by a plurality of basic rate ISDN lines comprising an ISDN D channel and two ISDN B channels, and connected to said communication apparatus (12) by at least one primary rate ISDN line comprising a plurality of ISDN B channels and a packet handler interface carrying a plurality of ISDN D channel communications.

9. A method according to claim 8, including the step of routing D channel communications not directed to said service provider apparatus (15) out of said communication apparatus (12) to a packet switch public data network (13), terminating D channel communications directed to said service provider apparatus (15), and generating D channel communications for communications from said service provider (15) apparatus to said terminal (10).

10. A method according to claim 2, including the steps of carrying out an authentication exchange between said terminals (10) and said service provider apparatus (15) via said communication apparatus (12) when communication is included to authenticate a first channel, and when the number of said multiple channels is to be increased for the communication, carrying out subsequent authentication exchanges between said terminals (10) and said communication apparatus (12) to authenticate further channels in accordance with said multi link point-to-point protocol.

11. A method according to claim 10, wherein said authentication is carried out in accordance with said multi link point-to-point protocol between said terminals (10) and said communication apparatus (12) and in accordance with said point-to-point protocol between said communication apparatus (12) and said service provider apparatus (15).

12. A method according to any preceding claim, wherein at least one of the terminals (10) comprises a router or modem.

13. A method according to claim 1, wherein said multiple channels comprise digital subscriber lines and said single channel comprises a virtual circuit.

14. A method according to claim 13, wherein at least one of the terminals (10) comprises a digital subscriber line, modem or router.

15. A method according to claim 12 or claim 14, wherein the terminals communicate with one or more processing apparatuses using Internet Protocol or single link point-to-point protocol.

16. A communication system comprising:
at least one terminal (10);
a communication apparatus (12);
multiple communication channels connecting the or each terminal (10) to said communication apparatus (12);
at least one service provider apparatus (15);
a single channel connecting said communication apparatus (12) and the or each service provider apparatus (15);
the or each terminal (10) being adapted to transmit and receive data over said multiple communication channels using multi link point-to-point protocol;
the or each service provider apparatus (15) being adapted to transmit and receive data over said channel using single link point-to-point protocol;
said communication apparatus (12) being adapted to receive and transmit data over said multiple communication channels using said multi link point-to-point protocol to communicate with the or each terminal (10), to receive and transmit data over said single channel using said single link point-to-point protocol to communicate with the or each service provider apparatus (15), the communication apparatus being adapted to provide the or each service provider apparatus with a single link point-to-point session for communicating with the or each respective terminal (10), whereby a separate point-to-point session is provided between the or each service provider apparatus and the or each respective terminal (10).

17. A communication system according to claim 16, wherein said communication apparatus (12) includes bandwidth control means for controlling the bandwidth allocated for communications by controlling the number of said multiple channels to be used for communication between the or each terminal (10) and said communication apparatus (12), and said single channel is adapted to carry a variable bandwidth.

18. A communication system according to claim 17, wherein said bandwidth control means is adapted to control the bandwidth allocated between the or each terminal (10) and the or each service provider apparatus (15) in accordance with predetermined criteria for a user of the or each terminal (10).

19. A communication system according to claim 18, wherein said bandwidth control means is adapted to use said predetermined criteria which includes information on a service subscribed to by the user.

20. A communication system according to any one of claims 17 to 19, wherein said communication apparatus (12) includes monitoring means for monitoring and recording the bandwidth usage by a user of the or each terminal (10) and said bandwidth control means is adapted to control the bandwidth in dependence upon the recorded bandwidth usage.

21. A communication system according to any one of claims 17 to 20, comprising a plurality of said terminals (10), wherein said bandwidth control means is adapted to control the bandwidth in dependence upon contention between users of said terminals (10) for channels between said terminals (10) and said communication apparatus (12).

22. A communication system according to any one of claims 16 to 21, wherein said multiple channels comprise at least one ISDN D channel and at least two ISDN B channels which terminate at said communication apparatus (12).

23. A communication system according to claim 22, including an ISDN switch connected to the or each terminal (10) by a basic rate ISDN line comprising a D channel and two B channels and connected to said communication apparatus (12) by at least one primary rate ISDN line comprising a plurality of ISDN B channels and a packet handler interface carrying a plurality of ISDN D channel communications.

24. A communication system according to claim 23, wherein said communication apparatus (12) comprises switching means for routing the D channel communications not directed to the or each service provider apparatus (15) out of said communication apparatus (12) to a packet switched public data network, for terminating D channel communications directed to said service provider apparatus (15), and for generating D channel communications for communications from the or each service provider apparatus (15) to the or each terminal (10).

25. A communication system according to claim 17, wherein the or each terminal (10) and the or each service provider apparatus (15) are adapted to carry out an authentication exchange when communication is initiated therebetween to authenticate a first channel, said communication apparatus (12) is adapted to be transparent to the authentication exchange, and said communication apparatus (12) and the or each terminal (10) are adapted to carry out subsequent authentication exchanges when further channels are required to increase bandwidth to authenticate the further channels in accordance with said multi link protocol.

26. A communication system according to claim 25, wherein the or each terminal (10) and said communication apparatus (12) are adapted to carry out the authentication in accordance with said multi link point-to-point protocol, and said communication apparatus (12) and said service provider apparatus (15) are adapted to carry out the initial authentication in accordance with said point-to-point protocol.

27. A communication system according to any one of claims 16 to 26, wherein the or each terminal (10) comprises a router or modem.

28. A communication system according to claim 16, wherein said multiple channels comprise digital subscriber lines and the single channel comprises a virtual circuit.

29. A communication system according to claim 28, wherein the terminal comprises a digital subscriber line modem or router.

30. A communication system according to claim 27 or claim 29, wherein the or each terminal (10) includes input means for communicating with one or more processing apparatuses using Internet Protocol or single link point-to-point protocol.

31. A communication apparatus (12) comprising:
a first interface for communicating over multiple channels with at least one terminal (10) using multi link point-to-point protocol;
a second interface for communicating over a single channel with at least one service provider apparatus (15) using single link point-to-point protocol; and
converting means for aggregating communications received from the or each terminal (10) in said multi link point-to-point protocol to said single link point-to-point protocol for communication to the or each service provider apparatus (15), and for splitting communications received from the or each service provider apparatus (15) in said single link point-to-point protocol to said multi link point-to-point protocol for communication to the or each terminal (10), the converting means being adapted to provide the or each service provider apparatus with a separate single link point-to-point session for communicating with the or each respective terminal whereby a separate point-to-point session is provided between the or each service provider apparatus and the or each respective terminal (10).

32. A communication apparatus according to claim 31, including bandwidth control means for controlling the bandwidth allocated for communications by controlling the number of said multiple channels to be used for communication between the or each terminal (10) and said communication apparatus (12), wherein said second interface is adapted to carry a variable bandwidth single channel.

33. A communication apparatus according to claim 32, wherein said bandwidth control means is adapted to control the bandwidth allocated between the or each terminal (10) and the or each service provider apparatus (15) in accordance with predetermined criteria for a user of the or each terminal (10).

34. A communication apparatus according to claim 33, wherein said bandwidth control means is adapted to use said predetermined criteria which includes information on a service subscribed to by the user.

35. A communication apparatus according to any one of claims 33 to 34, including monitoring means for monitoring and recording the bandwidth usage by a user of the or each terminal (10) and said bandwidth control means is adapted to control the bandwidth in dependence upon the recorded bandwidth usage.

36. A communication apparatus according to any one of claims 32 to 35, wherein said bandwidth control means is adapted to control the bandwidth in dependence upon contention between users of said terminals (10) for channels between said terminals (10) and said communication apparatus (12).

37. A communication apparatus according to any one of claims 31 to 36, wherein said first interface is adapted to connect to at least one ISDN D channel and at least two ISDN B channels from the or each terminal (10).

38. A communication apparatus according to claim 37, wherein said first interface is adapted to connect to at least one primary rate ISDN line comprising a plurality of ISDN B channels, and includes a packet handler interface for connection to a packet handler line carrying a plurality of ISDN D channel communications.

39. A communication apparatus according to claim 38, including switching means for routing the D channel communications not directed to the or each service provider apparatus (15) out of said communication apparatus (12) to a packet switched public data network (13), for terminating D channel communications directed to said service provider apparatus (15), and for generating D channel communications for communications from the or each service provider apparatus (15) to the or each terminal (10).

40. A communication apparatus according to claim 32, including authentication means for passing authentication data between the or each terminal (10) and the or each service provider apparatus (15) when communication is initiated to authenticate a first channel, and for exchanging authentication data with the or each terminal (10) when further channels are required to increase bandwidth to authenticate the further channels in accordance with said multi link protocol.

41. A communication apparatus according to claim 40, wherein said authentication means is adapted to carry out the authentication with the or each terminal (10) in accordance with said multi link point to point protocol, and to carry out the initial authentication with the or each service provider apparatus (15) in accordance with said point-to-point protocol.

42. A communication apparatus according to claim 31, wherein said first interface is adapted for communicating using multiple virtual circuits and said second interface is adapted for communicating using a single virtual circuit.

## Patentansprüche

1. Verfahren zur Kommunikation zwischen einer Vielzahl von Endgeräten (10) und eine Dienstleistungsvorrichtung (15) über eine Kommunikationsvorrichtung (2) wobei das Verfahren folgendes umfasst:
Kommunikation über Mehrfachkanäle zwischen den Endgeräten (10) und der Kommunikationsvorrichtung (12), wobei ein Mehrfachverbindungs-Punkt-zu-Punkt-Protokoll benutzt wird;
Kommunikation über einen einzigen Kanal zwischen der Kommunikationsvorrichtung (12) und der Dienstleistungsvorrichtung (15), wobei ein Einfachverbindungs-Punkt-zu-Punkt-Protokoll benutzt wird; und
bei der Kommunikationsvorrichtung (12), Vereinigung der von den Endgeräten (10) in dem Mehrfachverbindungs-Punkt-zu-Punkt-Protokoll empfangenen Kommunikationen in dem Einfachverbindungs-Punkt-zu-Punkt-Protokoll für eine Kommunikation an die Dienstleistungsvorrichtung (15) und Spaltung der von der Dienstleistungsvorrichtung (15) in dem Einfachverbindungs-Punkt-zu-Punkt-Protokoll empfangenen Kommunikationen auf das Mehrfachverbindungs-Punkt-zu-Punkt-Protokoll zur Kommunikation an die Endgeräte (10), wobei die Kommunikationsvorrichtung der Dienstleistungsvorrichtung eine separate Einfachverbindungs-Punkt-zu-Punkt-Sitzung für eine Kommunikation mit jedem entsprechenden Endgerät bereitstellt und wobei eine separate Punkt-zu-Punkt-Sitzung zwischen der Dienstleistungsvorrichtung und jedem entsprechenden Endgerät (10) bereitgestellt wird.

2. Verfahren nach Patentanspruch 1, umfassend die Steuerung der den Kommunikationen zugeordneten Bandbreite, indem die Anzahl der Kanäle für die Kommunikation zwischen einem der Endgeräte (10) und der Kommunikationsvorrichtung (12) benutzten Mehrfachkanäle gesteuert wird , und wobei der die Einfachkanal zwischen der Kommunikationsvorrichtung (12) und der Dienstleistungsvorrichtung (15) eine variable Bandbreite aufweist.

3. Verfahren nach Patentanspruch 2, wobei die der Kommunikation zwischen einem der Endgeräte (10) und der Dienstleistungsvorrichtung (15) zugeordnete Bandbreite an der Kommunikationsvorrichtung (12) entsprechend vorbestimmten Kriterien für einen Benutzer des Endgeräts (10) gesteuert wird.

4. Verfahren nach Patentanspruch 3, wobei die vorbestimmten Kriterien, die Information über eine Dienstleistung umfassen, die der Benutzer abonniert hat, umfasst.

5. Verfahren nach irgendeinem der Ansprüche 2 bis 4, umfassend die Überwachung und Aufzeichnung der Benutzung der Bandbreite durch einen Benutzer eines der Endgeräte (10), und die Bandbreite wird in Abhängigkeit von der Aufzeichnung der Benutzung der Bandbreite gesteuert.

6. Verfahren nach irgendeinem der Ansprüche 2 bis 5, wobei die den Kommunikationen zwischen den Endgeräten (10) und einer Dienstleistungsvorrichtung (15) zugeordnete Bandbreite in Abhängigkeit von der Konkurrenzsituation zwischen den Benutzern der Endgeräte (10) um die Kanäle zwischen den Endgeräten (10) und der Kommunikationsvorrichtung (12) gesteuert wird.

7. Verfahren nach jedem vorangehenden Patentanspruch, wobei die Mehrfachkanäle mindestens einen ISDN-D-Kanal und mindestens zwei ISDN-B-Kanäle umfassen, die an der Kommunikationsvorrichtung (12) enden.

8. Verfahren nach Patentanspruch 7, wobei die Kommunikation über die Mehrfachkanäle über einen ISDN-Schalter (11) stattfindet, der an mehrere der Endgeräte (10) durch mehrere einen ISDN-D-Kanal und zwei ISDN-B-Kanäle umfassende Basisraten-ISDN-Leitungen und an die Kommunikationsvorrichtung (12) durch mindestens eine mehrere eine Vielzahl von ISDN-D-Kanalkommunikationen transportierende ISDN-B-Kanäle und eine Packet-Handler-Schnittstelle umfassende Primär-ISDN-Leitung angeschlossen ist.

9. Verfahren nach Patentanspruch 8, umfassend den Schritt zum Routen von nicht auf die Dienstleistungsvorrichtung (15) hingerichtete, aus der Kommunikationsvorrichtung (12) herauskommende, zu dem öffentlichen Datennetz mit Paketvermittlung (13) hingerichtete D- Kanalkommunikationen, zum Beenden der auf die Dienstleistungsvorrichtung (15) hingerichtete D-Kanalkommunikationen, und zur Erzeugung von D-Kanalkommunikationen für die Kommunikationen von der Dienstleistungsvorrichtung (15) zu dem Endgerät (10).

10. Verfahren nach Patentanspruch 2, umfassend die Schritte zum Ausführen eines Austausches der Authentisierung zwischen Endgeräten (10) und der Dienstleistungsvorrichtung (15) über die Kommunikationsvorrichtung (12), wenn die Kommunikation zur Authentisierung eines ersten Kanals enthalten ist, und wenn die Anzahl der Mehrfachkanäle für die Kommunikation erhöht werden muss, Ausführung darauf folgender Authentisierungsaustauschvorgänge zwischen Endgeräten (10) und der Kommunikationsvorrichtung (12) zur Authentisierung weiterer Kanäle gemäß dem Mehrfachverbindungs-Punkt-zu-Punkt-Protokoll.

11. Verfahren nach Patentanspruch 10, wobei die die Authentisierung gemäß dem Mehrfachverbindungs-Punkt-zu-Punkt-Protokoll zwischen Endgeräten (10) und der Kommunikationsvorrichtung (12) und gemäß dem Punkt-zu-Punkt-Protokoll zwischen der Kommunikationsvorrichtung (12) und der Dienstleistungsvorrichtung (15) ausgeführt wird.

12. Verfahren nach jedem Patentanspruch, worin mindestens eines der Endgeräte (10) einen Router oder ein Modem umfasst.

13. Verfahren nach Patentanspruch 1, wobei die Mehrfachkanäle digitale Teilnehmerleitungen und der Einfachkanal eine virtuelle Leitung umfassen.

14. Verfahren nach Patentanspruch 13, worin mindestens eines der Endgeräte (10) eine digitale Teilnehmerleitung, ein Modem oder einen Router umfasst.

15. Verfahren nach Patentanspruch 12 oder 14, worin die Endgeräte mit einem oder mehreren, ein Internetprotokoll oder ein Einzelverbindungs-Punkt-zu-Punkt-Protokoll benutzenden Verarbeitungsvorrichtungen kommunizieren.

16. Kommunikationssystem umfassend:
mindestens ein Endgerät (10);
eine Kommunikationsvorrichtung (12);
Mehrfachkommunikationskanäle, die das oder jedes Endgerät (10) mit der Kommunikationsvorrichtung (12) verbinden;
mindestens eine Dienstleistungsvorrichtung (15);
einen Einzelkanal, der Kommunikationsvorrichtung (12) mit der oder jeder Dienstleistungsvorrichtung (15) verbindet;
das oder jedes Endgerät (10), das dazu geeignet ist, Daten über Mehrfachkommunikationskanäle unter Benutzung des Mehrfachverbindungs-Punkt-zu-Punkt-Protokoll zu übertragen und zu empfangen;
die oder jede Dienstleistungsvorrichtung (15), das dazu geeignet ist, Daten über Kanal unter Benutzung des Einfachverbindungs-Punkt-zu-Punkt-Protokoll zu übertragen und zu empfangen;
die Kommunikationsvorrichtung (12), die dazu geeignet ist, Daten über Mehrfachkommunikationskanäle unter Benutzung des Mehrfachverbindungs-Punkt-zu-Punkt-Protokolls zu übertragen und zu empfangen, um mit dem oder jedem Endgerät (10) zu kommunizieren, die dazu geeignet ist, Daten über Einfachkommunikationskanal unter Benutzung des Einfachverbindungs-Punkt-zu-Punkt-Protokolls zu übertragen und zu empfangen, um mit der oder jeder Dienstleistungsvorrichtung (15) zu kommunizieren, wobei die Kommunikationsvorrichtung dazu geeignet ist, einer Einfachverbindungs Punkt-zu-Punkt-Sitzung die oder jede Dienstleistungsvorrichtung zur Verfügung zu stellen, um mit dem oder jedem jeweiligen Endgerät (10) zu kommunizieren, wodurch eine separate Punkt-zu-Punkt-Sitzung zwischen der oder jeder Dienstleistungsvorrichtung und dem oder jedem jeweiligen Endgerät (10) zur Verfügung gestellt wird.

17. Kommunikationssystem nach Patentanspruch 16, wobei die Kommunikationsvorrichtung (12) Bandbreitensteuermittel zur Steuerung der den Kommunikationen zugeordneten Bandbreite umfasst, indem die Anzahl der für die Kommunikation zwischen dem oder jedem Endgerät (10) und der Kommunikationsvorrichtung (12) zu benutzende Mehrfachkanäle gesteuert wird , wobei der Einfachkanal dazu geeignet ist eine variable Bandbreite aufzuweisen.

18. Kommunikationssystem nach Patentanspruch 17, wobei die Bandbreitensteuermittel dazu geeignet sind, die der Kommunikation zwischen dem oder jedem Endgerät (10) und der oder jeder Kommunikationsvorrichtung (12) zugeordnete Bandbreite gemäß den vorbestimmten Kriterien für einen Benutzer des oder jeden Endgeräts (10) zu steuern.

19. Kommunikationssystem nach Patentanspruch 18, wobei die Bandbreitensteuermittel dazu geeignet sind, die vorbestimmten Kriterien, die Information über eine Dienstleistung umfassen, für die der Benutzer abonniert ist, zu benutzen.

20. Kommunikationssystem nach irgendeinem der Patentansprüche 17 bis 19, wobei die Kommunikationsvorrichtung (12) ein Überwachungsmittel zur Überwachung und Aufzeichnung der Bandbreitenbenutzung durch einen Benutzer des oder jedes Endgeräts (10) umfasst und das Bandbreitensteuermittel dazu geeignet ist, die Bandbreite in Abhängigkeit von der aufgezeichneten Bandbreitenbenutzung zu steuern.

21. Kommunikationssystem nach irgendeinem der Patentansprüche 17 bis 20, umfassend eine Vielzahl der Endgeräte (10) wobei das Bandbreitensteuerungsmittel dazu geeignet ist, die Bandbreite in Abhängigkeit von der Konkurrenzsituation zwischen den Benutzern der Endgeräte (10) für die Kanäle zwischen den Endgeräten (10) und der Kommunikationsvorrichtung (12) zu steuern.

22. Kommunikationssystem nach irgendeinem der Patentansprüche 16 bis 21, wobei die Mehrfachkanäle mindestens einen ISDN-D-Kanal und mindestens zwei ISDN-B-Kanäle umfasst, die an der Kommunikationsvorrichtung (12) enden.

23. Kommunikationssystem nach Patentanspruch 22, umfassend einen ISDN-Schalter, der an das oder jedes Endgerät (10) durch eine, einen D- Kanal und zwei B-Kanäle umfassende Basisraten-ISDN-Leitung angeschlossen ist und an die Kommunikationsvorrichtung (12) durch mindestens eine, mehrere, eine Vielzahl von ISDN-D-Kanalkommunikationen transportierende, ISDN-B-Kanäle und eine Packet-Handler- Schnittstelle umfassende Primär-ISDN-Leitung angeschlossen ist.

24. Kommunikationssystem nach Patentanspruch 23, wobei die die Kommunikationsvorrichtung (12) ein Schaltmittel zum Routen von nicht auf die oder jede Dienstleistungsvorrichtung (15) hingerichtete, aus der Kommunikationsvorrichtung (12) herauskommende, zu dem öffentlichen Datennetz mit Paketvermittlung (13) hin gerichtete D- Kanalkommunikationen, zum Beenden der auf die Dienstleistungsvorrichtung (15) hin gerichtete D-Kanalkommunikationen, und zur Erzeugung von D-Kanalkommunikationen für Kommunikationen von der Dienstleistungsvorrichtung (15) zu dem oder jedem Endgerät (10).

25. Kommunikationssystem nach Patentanspruch 17, wobei das oder jedes Endgerät (10) und die oder jede Dienstleistungsvorrichtung (15) zum Ausführen eines Authentisierungsaustauschs geeignet sind, wenn die Kommunikation zwischen dem oder jedem Endgerät (10) und der oder jeder Dienstleistungsvorrichtung (15) eingeleitet wird um einen ersten Kanal zu authentisieren, wobei die die Kommunikationsvorrichtung (12) für den Authentisierungsaustausch transparent ist und wobei die die Kommunikationsvorrichtung (12) und das oder jedes Endgerät (10) dazu geeignet sind, einen aufeinander folgenden Authentisierungsaustausch auszuführen, wenn zusätzliche Kanäle zur Vergrößerung der Bandbreite erforderlich sind, um die zusätzlichen Kanäle gemäß dem Mehrfachverbindungs-Punkt-zu-Punkt-Protokoll zu authentisieren.

26. Kommunikationssystem nach Patentanspruch 25, wobei das oder jedes Endgerät (10) und die oder jede die die Kommunikationsvorrichtung (12) dazu geeignet sind, die Authentisierung gemäß dem Mehrfachverbindungs-Punkt-zu-Punkt-Protokoll auszuführen und die oder jede Kommunikationsvorrichtung (12) und die oder jede Dienstleistungsvorrichtung (15) dazu geeignet sind, die anfängliche Authentisierung gemäß dem Punkt-zu-Punkt-Protokoll auszuführen.

27. Kommunikationssystem nach irgendeinem der Patentansprüche 16 bis 26, wobei das oder jedes Endgerät (10) einen Router oder ein Modem umfasst.

28. Kommunikationssystem nach Patentanspruch 16, wobei die Mehrfachkanäle digitale Teilnehmerleitungen und der einzelne Kanal eine virtuelle Leitung umfasst.

29. Kommunikationssystem nach Patentanspruch 28, wobei das Endgerät einen Router oder ein Modem für die digitale Teilnehmerleitung umfasst.

30. Kommunikationssystem nach Patentanspruch 27 oder 29, wobei das oder jedes Endgerät (10) Eingangsmittel zur Kommunikation mit einer oder mehreren, das Intemetprotokoll oder das Einfachverbindungs-Punkt-zu-Punkt-Protokoll benutzende Verarbeitungsvorrichtungen umfasst.

31. Kommunikationsvorrichtung (12), umfassend:
eine erste Schnittstelle zur Kommunikation über mehrere Kanäle mit mindestens einem Endgerät (10), wobei ein Mehrfachverbindungs-Punkt-zu-Punkt-Protokoll benutzt wird;
eine zweite Schnittstelle zur Kommunikation über einen einzigen Kanal mit mindestens einer Dienstleistungsvorrichtung (15), wobei ein Einfachverbindungs-Punkt-zu-Punkt-Protokoll benutzt wird; und
Konvertierungsmittel zur Vereinigung der von den Endgeräten (10) in dem Mehrfachverbindungs-Punkt-zu-Punkt-Protokoll empfangenen Kommunikationen in dem Einfachverbindungs-Punkt-zu-Punkt-Protokoll für eine Kommunikation an die oder jede Dienstleistungsvorrichtung (15) und Verteilung der von der Dienstleistungsvorrichtung (15) in dem Einfachverbindungs-Punkt-zu-Punkt-Protokoll empfangenen Kommunikationen auf das Mehrfachverbindungs-Punkt-zu-Punkt-Protokoll zur Kommunikation an das oder jedes Endgerät (10), wobei die Konvertierungsmittel dazu geeignet sind, die oder jede Dienstleistungsvorrichtung mit einer separaten Einfachverbindungs-Punkt-zu-Punkt-Sitzung für eine Kommunikation mit dem oder jedem entsprechenden Endgerät zu versehen, wobei eine separate Punkt-zu-Punkt-Sitzung zwischen der oder jeder Dienstleistungsvorrichtung und dem oder jedem entsprechenden Endgerät (10) bereitgestellt wird.

32. Kommunikationsvorrichtung nach Patentanspruch 31, umfassend Bandbreitensteuermittel zur Steuerung der den Kommunikationen zugeordneten Bandbreite indem die Anzahl der Vielzahl von zur Kommunikation zwischen den oder jedem Endgerät (10) und der oder jeder Kommunikationsvorrichtung (15) zu benutzenden Kanälen gesteuert wird, wobei die die zweite Schnittstelle dazu geeignet ist, einen einzigen Kanal mit variabler Bandbreite aufzunehmen.

33. Kommunikationsvorrichtung nach Patentanspruch 32, wobei die Bandbreitensteuermittel dazu geeignet sind, die Bandbreite zu steuern, die zwischen den oder jedem Endgerät (10) und der oder jeder Kommunikationsvorrichtung (15) gemäß vorbestimmten Kriterien für einen Benutzer des oder jedes Endgeräts (10) zugeordnet ist.

34. Kommunikationsvorrichtung nach Patentanspruch 33, wobei die Bandbreitesteuermittel dazu geeignet sind, die vorbestimmten Kriterien, die die Information über eine Dienstleistung für die der Benutzer abonniert ist, umfasst.

35. Kommunikationsvorrichtung nach irgendeinem der Patentansprüche 33 bis 34, umfassend die Überwachung und Aufzeichnung der Benutzung der Bandbreite durch einen Benutzer von dem oder jedem Endgerät (10) und wobei die Bandbreitensteuermittel dazu geeignet sind, die Bandbreite in Abhängigkeit von der aufgezeichneten Benutzung der Bandbreite zu steuern.

36. Kommunikationsvorrichtung nach irgendeinem der Patentansprüche 32 bis 35, wobei die Bandbreitensteuermittel dazu geeignet sind, die Bandbreite in Abhängigkeit von der Konkurrenzsituation zwischen den Benutzern der Endgeräte (10) für die Kanäle zwischen den Endgeräten (10) und der Kommunikationsvorrichtung (12) zu steuern.

37. Kommunikationsvorrichtung nach irgendeinem der Patentansprüche 31 bis 36, wobei die erste Schnittstelle dazu geeignet ist, an mindestens einen ISDN-D-Kanal und mindestens zwei ISDN-B-Kanäle von dem oder jedem Endgerät (10) aus angeschlossen zu werden.

38. Kommunikationsvorrichtung nach Patentanspruch 37, wobei die erste Schnittstelle dazu geeignet ist, an mindestens eine Primärraten-ISDN-Leitung angeschlossen zu werden, die eine Vielzahl von ISDN-B-Kanälen umfasst, und eine Packet-Handler-Schnittstelle für den Anschluss an eine Packet-Handler-Leitung die eine Vielzahl von ISDN-D-Kanal Kommunikationen aufnimmt, umfasst.

39. Kommunikationsvorrichtung nach Patentanspruch 38, umfassend ein Schaltmittel von nicht auf die Dienstleistungsvorrichtung (15) hingerichtete, aus der Kommunikationsvorrichtung (12) herauskommende, zu dem öffentlichen Datennetz mit Paketvermittlung (13) hingerichtete D-Kanalkommunikationen, zum Beenden der auf der Dienstleistungsvorrichtung (15) hingerichtete D-Kanalkommunikationen, und Erzeugung von D-Kanalkommunikationen für die Kommunikationen von der Dienstleistungsvorrichtung (15) zu dem oder jedem Endgerät (10).

40. Kommunikationsvorrichtung nach Patentanspruch 32, umfassend Authentisierungsmittel zur Übertragung der Authentisierungsdaten zwischen dem oder jedem Endgerät (10) und der oder jeder Kommunikationsvorrichtung (15) wenn die Kommunikation eingeleitet ist, um einen ersten Kanal zu authentisieren, und zum Austausch der Authentisierungsdaten mit dem oder jedem Endgerät (10) wenn zusätzliche Kanäle erforderlich sind, um die Bandbreite zu vergrößern damit die zusätzlichen Kanäle gemäß dem Mehrfachverbindungs-Punkt-zu-Punkt-Protokoll authentisiert werden können.

41. Kommunikationsvorrichtung nach Patentanspruch 40, wobei die Authentisierungsmittel dazu geeignet sind, die Authentisierung mit dem oder jedem Endgerät (10) gemäß dem Mehrfachverbindungs-Punkt-zu-Punkt-Protokoll auszuführen, und um die anfängliche Authentisierung mit der oder jeder Dienstleistungsvorrichtung (15) gemäß dem Punkt-zu-Punkt-Protokolle ausführen zu können.

42. Kommunikationsvorrichtung nach Patentanspruch 31, wobei die erste Schnittstelle zur Kommunikation unter Benutzung von virtuellen Mehrfachschaltungen geeignet ist und die zweite Schnittstelle zur Kommunikation unter Benutzung einer virtuellen Einfachleitung geeignet ist.

## Revendications

1. Méthode pour communiquer entre une pluralité de terminaux (10) et un équipement du fournisseur de services (15) via un équipement de communication (2), la méthode comprenant:
une communication sur de multiples canaux entre les terminaux (10) et l'équipement de communication (12) utilisant un protocole multiliaison point à point;
une communication sur un canal unique entre ledit équipement de communication (12) et ledit équipement du fournisseur de services (15) utilisant un protocole point à point de liaison simple; et
ledit équipement de communication (12), rassemblant les communications reçues des terminaux (10) dans ledit protocole multiliaison point à point audit protocole point à point de liaison simple pour la communication audit équipement du fournisseur de services (15) et séparant les communications reçues du dit équipement du fournisseur de services (15) dans ledit protocole point à point de liaison simple audit protocole multiliaison point à point pour la communication aux dits terminaux (10), l'équipement de communication pourvoyant l'équipement du fournisseur de services avec une session séparée point à point de liaison simple pour la communication avec chaque terminal respectif, par lequel une session séparée point à point est pourvue entre l'équipement du fournisseur de services et chaque terminal respectif (10).

2. Méthode selon la revendication 1, incluant le contrôle de la largeur de bande allouée pour les communications en contrôlant le nombre desdits canaux multiples à utiliser pour la communication entre l'un des dits terminaux (10) et ledit équipement de communication (12), où le canal unique entre ledit équipement de communication (12) et ledit équipement du fournisseur de services (15) est d'une largeur de bande variable.

3. Méthode selon la revendication 2, où la largeur de bande allouée pour la communication entre l'un des dits terminaux (10) et ledit équipement du fournisseur de services (15) est contrôlée audit équipement de communication (12) conformément aux critères déterminés au préalable pour un utilisateur des dits terminaux (10).

4. Méthode selon la revendication 3, où lesdits critères déterminés au préalable incluent des informations sur un service souscrit par l'utilisateur.

5. Méthode selon l'une des revendications 2 à 4, incluant le contrôle et l'enregistrement de l'utilisation de la largeur de bande par un utilisateur de l'un des terminaux (10) et la largeur de bande est contrôlée en fonction de l'enregistrement de l'utilisation de la largeur de bande.

6. Méthode selon l'une des revendications 2 à 5, où la largeur de bande allouée pour les communications entre les terminaux (10) et un équipement du fournisseur de services (15) est contrôlé en fonction du conflit entre les utilisateurs des dits terminaux (10) pour les canaux entre lesdits terminaux (10) et ledit équipement de communication (12).

7. Méthode selon l'une des revendications précédentes, où lesdits canaux multiples comprennent au moins un canal RNIS D et au moins deux canaux RNIS B qui se terminent audit équipement de communication (12).

8. Méthode selon la revendication 7, où la dite communication sur lesdits canaux multiples se passe via un commutateur RNIS (11) connecté à une pluralité de dits terminaux (10) par une pluralité de lignes RNIS à débit de base comprenant un canal RNIS D et deux canaux RNIS B et connecté audit équipement de communication (12) par au moins une ligne RNIS à débit primaire comprenant une pluralité de canaux RNIS B et une interface gestionnaire de paquets portant une pluralité de communications de canal RNIS D.

9. Méthode selon la revendication 8, incluant l'étape de routage des communications du canal D non dirigées vers ledit équipement du fournisseur de services (15) hors du dit équipement de communication (12) au réseau public de données à commutation par paquets (13), terminant les communications du canal D dirigées audit équipement du fournisseur de services (15) et générant les communications du canal D pour les communications du dit équipement du fournisseur de services (15) audit terminal (10).

10. Méthode selon la revendication 2, incluant les étapes qui consistent à effectuer un échange d'authentification entre lesdits terminaux (10) et ledit équipement du fournisseur de services (15) via ledit équipement de communication (12) quand la communication est inclue pour authentifier le premier canal et quand le nombre de dits canaux multiples doit être augmenté pour la communication, exécutant des échanges d'authentification ultérieurs entre lesdits terminaux (10) et ledit équipement de communication (12) pour authentifier davantage de canaux conformément audit protocole multiliaison point à point.

11. Méthode selon la revendication 10, où la dite authentification est exécutée conformément audit protocole multiliaison point à point entre lesdits terminaux (10) et ledit équipement de communication (12) et conformément audit protocole point à point entre ledit équipement de communication (12) et ledit équipement du fournisseur de services (15).

12. Méthode selon l'une des revendications précédentes, où au moins un des terminaux (10) comprend un routeur ou un modem.

13. Méthode selon la revendication 1, où lesdits canaux multiples comprennent des lignes d'abonné numérique et ledit canal unique comprend un circuit virtuel.

14. Méthode selon la revendication 13, où au moins un des terminaux (10) comprend une ligne d'abonné numérique, un modem ou un routeur.

15. Méthode selon la revendication 12 ou la revendication 14, où les terminaux communiquent avec un ou plusieurs équipements de traitement utilisant le protocole Internet ou le protocole point à point de liaison simple.

16. Système de communication comprenant:
au moins un terminal (10);
un équipement de communication (12);
des canaux de communication multiples connectant le ou chaque terminal (10) audit équipement de communication (12);
au moins un équipement du fournisseur de services (15);
un canal unique connectant ledit équipement de communication (12) au ou à chaque équipement du fournisseur de services (15);
le ou chaque terminal (10) étant adapté pour émettre et recevoir des données sur lesdits canaux de communication multiples utilisant le protocole multiliaison point à point;
le ou chaque équipement du fournisseur de services (15) étant adapté pour émettre et recevoir des données sur ledit canal utilisant le protocole point à point de liaison simple;
ledit équipement de communication (12) étant adapté pour recevoir et émettre des données sur lesdits canaux de communication multiples utilisant ledit protocole multiliaison point à point pour communiquer avec le ou chaque terminal (10), pour recevoir et émettre des données sur ledit canal unique utilisant ledit protocole point à point de liaison simple pour communiquer avec le ou chaque équipement du fournisseur de services (15), l'équipement de communication étant adapté pour pourvoir le ou chaque équipement du fournisseur de services avec une session point à point de liaison simple pour communiquer avec le ou chaque terminal respectif (10), par lequel une session point à point séparée est pourvue entre le ou chaque équipement du fournisseur de services et le
ou chaque terminal respectif (10).

17. Système de communication selon la revendication 16, où ledit équipement de communication (12) inclut un moyen de contrôle de largeur de bande pour contrôler la largeur de bande allouée pour les communications en contrôlant le nombre de dits canaux multiples à utiliser pour la communication entre le ou chaque terminal (10) et ledit équipement de communication (12) et ledit canal unique est adapté pour porter une largeur de bande variable.

18. Système de communication selon la revendication 17, où ledit moyen de contrôle de la largeur de bande est adapté pour contrôler la largeur de bande allouée entre le ou chaque terminal (10) et le ou chaque équipement du fournisseur de services (15) conformément aux critères déterminés au préalable pour un utilisateur du ou de chaque terminal (10).

19. Système de communication selon la revendication 18, où ledit moyen de contrôle de la largeur de bande est adapté pour utiliser lesdits critères déterminés au préalable qui incluent les informations sur un service souscrit par l'utilisateur.

20. Système de communication selon l'une des revendications 17 à 19, où ledit équipement de communication (12) inclut un moyen de contrôle pour le contrôle et l'enregistrement de l'utilisation de la largeur de bande par un utilisateur du ou de chaque terminal (10) et ledit moyen de contrôle de la largeur de bande est adapté pour contrôler la largeur de bande en fonction de l'utilisation de la largeur de bande enregistrée.

21. Système de communication selon l'une des revendications 17 à 20, comprenant une pluralité des dits terminaux (10), où ledit moyen de contrôle de la largeur de bande est adapté pour contrôler la largeur de bande en fonction du conflit entre les utilisateurs des dits terminaux (10) pour les canaux entre lesdits terminaux (10) et ledit équipement de communication (12).

22. Système de communication selon l'une des revendications 16 à 21, où lesdits canaux multiples comprennent au moins un canal RNIS D et au moins deux canaux RNIS B qui se terminent audit équipement de communication (12).

23. Système de communication selon la revendication 22, incluant un commutateur RNIS connecté au ou à chaque terminal (10) par une ligne RNIS à débit de base comprenant un canal D et deux canaux B et connecté audit équipement de communication (12) par au moins une ligne RNIS à débit primaire comprenant une pluralité de canaux RNIS B et une interface gestionnaire de paquets portant une pluralité de communications via le canal RNIS D.

24. Système de communication selon la revendication 23, où ledit équipement de communication (12) comprend un moyen de commutation pour le routage des communications du canal D non dirigés vers le ou chaque équipement du fournisseur de services (15) hors du dit équipement de communication (12) au réseau public de données à commutation par paquets pour terminer les communications du canal D dirigées audit équipement du fournisseur de services (15) et pour générer les communications du canal D pour les communications du ou de chaque équipement du fournisseur de services (15) au ou à chaque terminal (10).

25. Système de communication selon la revendication 17, où le ou chaque terminal (10) et le ou chaque équipement du fournisseur de services (15) sont adaptés pour effectuer un échange d'authentification quand la communication est initiée entre eux pour authentifier un premier canal, ledit équipement de communication (12) est adapté pour être transparent à l'échange d'authentification et ledit équipement de communication (12) et le ou chaque terminal (10) sont adaptés pour effectuer des échanges ultérieurs d'authentification quand davantage de canaux sont requis pour augmenter la largeur de bande pour authentifier davantage de canaux conformément audit protocole multiliaison.

26. Système de communication selon la revendication 25, où le ou chaque terminal (10) et ledit équipement de communication (12) sont adaptés pour effectuer l'authentification conformément au protocole multiliaison point à point et ledit équipement de communication (12) et ledit équipement du fournisseur de services (15) sont adaptés pour effectuer l'authentification initiale conformément audit protocole point à point.

27. Système de communication selon l'une des revendications 16 à 26, où le ou chaque terminal (10) comprend un routeur ou un modem.

28. Système de communication selon la revendication 16, où lesdits canaux multiples comprennent des lignes d'abonné numérique et le canal unique comprend un circuit virtuel.

29. Système de communication selon la revendication 28, où le terminal comprend une ligne d'abonné numérique, modem ou routeur.

30. Système de communication selon l'une des revendications 27 à 29, où le ou chaque terminal (10) inclut des moyens de communication entrants avec un ou plusieurs équipements de traitement utilisant le protocole Internet ou le protocole point à point de liaison simple.

31. Equipement de communication (12) comprenant:
une première interface pour communiquer sur des canaux multiples avec au moins un terminal (10) utilisant un protocole multiliaison point à point;
une seconde interface pour communiquer sur un canal unique avec au moins un équipement du fournisseur de services (15) utilisant un protocole point à point de liaison simple;
et convertissant le moyen pour regrouper les communications reçues du ou de chaque terminal (10) dans ledit protocole multiliaison point à point audit protocole point à point de liaison simple pour communiquer au ou à chaque équipement du fournisseur de services (15) et pour séparer les communications reçues du ou de chaque équipement du fournisseur de services (15) dans le protocole point à point de liaison simple audit protocole multiliaison point à point pour communiquer au ou à chaque terminal (10), le moyen convertissant est adapté pour pourvoir le ou chaque équipement du fournisseur de services avec une session séparée point à point de liaison simple pour communiquer avec le ou chaque terminal respectif, où une session point à point séparée est pourvue entre le
ou chaque équipement du fournisseur de services et le ou chaque terminal respectif (10).

32. Equipement de communication selon la revendication 31, incluant le moyen de contrôle de la largeur de bande pour contrôler la largeur de bande allouée pour les communications en contrôlant le nombre des dits canaux multiples à utiliser pour communiquer entre le ou chaque terminal (10) et ledit équipement de communication (12), où la dite seconde interface est adaptée pour diffuser un canal unique à largeur de bande variable.

33. Equipement de communication selon la revendication 32, où ledit moyen de contrôle de la largeur de bande est adapté pour contrôler la largeur de bande allouée entre le ou chaque terminal (10) et le ou chaque équipement du fournisseur de services (15) conformément aux critères déterminés au préalable pour un utilisateur du ou de chaque terminal (10).

34. Equipement de communication selon la revendication 33, où ledit moyen de contrôle de la largeur de bande est adapté pour utiliser lesdits critères déterminés au préalable qui incluent les informations sur un service souscrit par l'utilisateur.

35. Equipement de communication selon l'une des revendications 33 à 34, incluant le moyen de contrôle pour le contrôle et l'enregistrement de l'utilisation de la largeur de bande par un utilisateur du ou de chaque terminal (10) et ledit moyen de contrôle de la largeur de bande est adapté pour contrôler la largeur de bande en fonction de l'utilisation de la largeur de bande enregistrée.

36. Equipement de communication selon l'une des revendications 32 à 35, où ledit moyen de contrôle de la largeur de bande est adapté pour contrôler la largeur de bande en fonction du conflit entre les utilisateurs des dits terminaux (10) pour les canaux entre lesdits terminaux (10) et ledit équipement de communication (12).

37. Equipement de communication selon l'une des revendications 31 à 36, où la dite première interface est adaptée pour connecter au moins un canal RNIS D et au moins deux canaux RNIS B du ou de chaque terminal (10).

38. Equipement de communication selon la revendication 37, où la dite première interface est adaptée pour connecter au moins une ligne RNIS à débit primaire comprenant une pluralité de canaux RNIS B et inclut une interface gestionnaire de paquets portant une pluralité de communications de canaux RNIS D.

39. Equipement de communication selon la revendication 38, incluant un moyen de commutation pour le routage des communications du canal D non dirigées à l'équipement du fournisseur de services (15) hors du dit équipement de communication (12) au réseau public de données à commutation de paquets (13) pour terminer les communications du canal D dirigées audit équipement du fournisseur de services (15) et pour générer les communications du canal D pour les communications du ou de chaque équipement du fournisseur de services (15) au ou à chaque terminal (10).

40. Equipement de communication selon la revendication 32, incluant le moyen d'authentification pour transmettre des données d'authentification entre le ou chaque terminal (10) et le ou chaque équipement du fournisseur de services (15) quand la communication est initiée pour authentifier un premier canal et pour échanger des données d'authentification avec le ou chaque terminal (10) quand davantage de canaux sont requis pour augmenter la largeur de bande pour authentifier davantage de canaux conformément audit protocole multiliaison.

41. Equipement de communication selon la revendication 40, où ledit moyen d'authentification est adapté pour effectuer l'authentification avec le ou chaque terminal (10) conformément au protocole multiliaison point à point et effectuer l'authentification initiale avec le ou chaque équipement du fournisseur de services (15) conformément audit protocole point à point.

42. Equipement de communication selon la revendication 31, où la dite première interface est adaptée pour communiquer en utilisant des circuits virtuels multiples et la dite seconde interface est adaptée pour communiquer en utilisant un circuit virtuel unique.
